# EUROPÄISCHE PATENTSCHRIFT

(11) **EP 2 058 992 B1**
(45) Veröffentlichungstag und Bekanntmachung des Hinweises auf die Patenterteilung: **06.04.2011**
(21) Anmeldenummer: 08105503.0
(22) Anmeldetag: 07.10.2008
(51) Int. Cl.: H04L 12/58, G08G 1/16, H04L 29/06

(54) **Verfahren zum Bearbeiten von Nachrichten und Nachrichtenbearbeitungsvorrichtung**
Method for processing messages and device therefor
Procédé destiné au traitement d'informations et dispositif de traitement d'informations

(30) Priorität: 08.11.2007 DE 102007053255
(43) Veröffentlichungstag der Anmeldung: 13.05.2009
(73) Patentinhaber: Continental Automotive GmbH, 30165 Hannover (DE)
(72) Erfinder: Falk, Rainer, 85435, Erding (DE); Kohlmayer, Florian, 82319, Starnberg (DE)

(56) Entgegenhaltungen:
- EP-A- 1 975 900
- US-A1- 2005 054 346
- CHRISTINE LAURENDEAU ET AL: "Secure Anonymous Broadcasting in Vehicular Networks" LOCAL COMPUTER NETWORKS, 2007. LCN 2007. 32ND IEEE CONFERENCE ON, IEEE, PI, 1. Oktober 2007 (2007-10-01), Seiten 661-668, XP031153108 ISBN: 978-0-7695-3000-0
- CHRISTOPHER KELLUM C ED - KIT-YEE CHOW ET AL: "Six Application Mechanisms Required for Wireless Access in Vehicular Environments (WAVE)" VEHICULAR TECHNOLOGY CONFERENCE, 2007. VTC2007-SPRING. IEEE 65TH, IEEE, PI, 1. April 2007 (2007-04-01), Seiten 2585-2589, XP031093098 ISBN: 978-1-4244-0266-3

## Beschreibung

Um Informationen auszutauschen und beispielsweise die Sicherheit im Straßenverkehr zu erhöhen, kommunizieren Fahrzeuge untereinander und mit Infrastrukturservern. Infrastrukturserver stellen stationäre Datenstationen, so genannte Road Side Units, dar. Ein Fahrzeug erhält zum Beispiel per Funk Nachrichten von anderen Fahrzeugen oder von Road Side Units, welche beispielsweise Verkehrsflussinformationen, Glatteis- oder Unfallwarnungen umfassen. Durch eine derartige Kommunikation empfängt ein Fahrzeug eine Vielzahl an Nachrichten, zum Beispiel in Form von so genannten Wireless Short Message-Nachrichten (WSM), welche gemäß dem IEEE 1609-Standard in einem linearen Ablauf bearbeitet werden. Die Wireless Short Message-Nachrichten sind entsprechend des IEEE 1609.2-Standards durch eine so genannte digitale Signatur geschützt, welche eine Sicherheitsüberprüfung der Nachricht ermöglicht und Manipulationen erkennen lässt. Solch eine Sicherheitsüberprüfung stellt in Anbetracht der hohen Rate an eintreffenden Nachrichten hohe Anforderungen an die Rechenleistung und Speicherkapazität der die Nachricht empfangenden Einheit des Fahrzeugs.

Aus der Veröffentlichung US 2005/0054346 A1 ist ein Routingverfahren bekannt, mittels dem Daten von einem Knoten zu einem anderen übertragen werden. Das Netzwerk umfasst eine Vielzahl von mobilen Knotenpunkten und drahtlosen Kommunikationsverbindungen zwischen den Knoten.

Aus C. Landereau et al: "Secure Anonymous Broadcasting in Vehicular Networks" (XP-31153108) ist eine Lehre bekannt, wie ein Ad-Hoc-Netzwerk bestehend aus Fahrzeugen manipulationssicher und abhörischer ausgestaltet werden kann.

Die Aufgabe der Erfindung ist, ein Verfahren und eine Vorrichtung zum Bearbeiten von Nachrichten zu schaffen, das beziehungsweise die ein schnelles und zuverlässiges Bearbeiten von Nachrichten ermöglicht.

Die Aufgabe wird gelöst durch die Merkmale der unabhängigen Patentansprüche. Vorteilhafte Weiterbildungen der Erfindung sind in den Unteransprüchen gekennzeichnet.

Gemäß eines ersten Aspekts zeichnet sich die Erfindung aus durch ein Verfahren zum Bearbeiten von Nachrichten in einer Nachrichtenbearbeitungsvorrichtung, die zumindest einen Empfangspuffer aufweist, wobei eine jeweilige Nachricht zumindest ein Authentifizierungselement und einen Nachrichteninhalt umfasst. Die jeweilige Nachricht wird empfangen, in dem Empfangspuffer abgelegt, und eine Kenngröße einer Priorität hinsichtlich einer Sicherheitsüberprüfung der jeweiligen Nachricht wird abhängig von dem Nachrichteninhalt ermittelt. Eine Bearbeitungsfolge für eine weitere Nachrichtenbearbeitung hinsichtlich der Sicherheitsüberprüfung unter Berücksichtigung des jeweiligen zumindest einen Authentifizierungselements der in dem Empfangspuffer befindlichen Nachrichten wird abhängig von den Werten der Kenngröße der Priorität hinsichtlich der Sicherheitsüberprüfung der Nachrichten festgelegt und durchgeführt.

Auf diese Weise können Nachrichten in Abhängigkeit ihres Nachrichteninhalts bevorzugt bearbeitet werden hinsichtlich ihrer Sicherheitsüberprüfung. In der Regel erfolgt im Rahmen der Sicherheitsüberprüfung auch eine weitere inhaltliche Nachrichtenbearbeitung einer Nachricht. Die Nachricht ist beispielsweise eine Wireless Short Message-Nachricht, welche von einem Fahrzeug per Funk empfangen wird. Um eine Sicherheitsüberprüfung einer Nachricht zu ermöglichen, umfasst die Nachricht zusätzlich zum Nachrichteninhalt zumindest ein Authentifizierungselement. Das Authentifizierungselement kann beispielsweise eine kryptographische Prüfsumme (Message Authentication Code) und/oder eine digitale Signatur und/oder ein digitales Zertifikat und/oder eine Zertifikatskette umfassen. Durch das Authentifizierungselement kann beispielsweise der Sender identifiziert werden und die Integrität der signierten, elektronischen Daten geprüft werden.

Durch das Ermitteln von Prioritäten wird das Festlegen einer Bearbeitungsfolge möglich und eine Bearbeitung der Nachrichten an bestimmte Voraussetzungen anpassbar. Das Ermitteln der Kenngröße der Priorität hinsichtlich der Sicherheitsüberprüfung abhängig vom Nachrichteninhalt kann insbesondere im Rahmen einer Vorverarbeitung des Nachrichteninhalts erfolgen. Das Ermitteln der Kenngröße der Priorität hinsichtlich der Sicherheitsüberprüfung kann abhängig vom Nachrichteninhalt mit vergleichsweise geringem Rechenaufwand im Vergleich zur Sicherheitsüberprüfung durchgeführt werden. Auf diese Weise können dann die verfügbaren Rechenressourcen und/oder Speicherressourcen hinsichtlich der weiteren Nachrichtenbearbeitung, die neben der Sicherheitsüberprüfung auch eine weitere inhaltliche Bearbeitung der Nachricht umfassen kann, sehr zielgerichtet eingesetzt werden und so eine auf die Gesamtheit der Nachrichten sehr wirkungsvolle Bearbeitung sichergestellt werden.

Erfindungsgemäß wird die Kenngröße der Priorität hinsichtlich der Sicherheitsüberprüfung der jeweiligen Nachricht in Abhängigkeit von mindestens einem Authentifizierungselement der jeweiligen Nachricht ermittelt. Dies ermöglicht auch Informationen bezüglich des Senders einfach beim Ermitteln der Kenngröße der Priorität hinsichtlich der Sicherheitsüberprüfung zu berücksichtigen. Es ist so beispielsweise möglich, die Sicherheitsüberprüfung in Abhängigkeit von bereits bekannten Sendern durchzuführen, das heißt bei bekannten Sendern die Sicherheitsüberprüfung eventuell auf einen späteren Zeitpunkt zu verschieben und andere Sicherheitsüberprüfungen von Nachrichten mit unbekannten Sendern zu bevorzugen. Auch kann beispielsweise anhand des mindestens einen Authentifizierungselements festgestellt werden, welcher Sendertyp vorliegt, so insbesondere, ob der Sender eine mobile Sendeeinheit oder eine örtlich feststehende Sendeeinheit ist, und beispielsweise im Falle der feststehenden Sendeeinheit eine Kenngröße der Priorität hinsichtlich der Sicherheitsüberprüfung vergeben werden, die ein bevorzugtes Bearbeiten der Nachricht bewirkt.

Weiterhin erfindungsgemäß wird die Kenngröße der Priorität hinsichtlich der Sicherheitsüberprüfung der jeweiligen Nachricht in Abhängigkeit eines Ermittelns einer drohenden Gefahrensituation ermittelt. Die drohende Gefahrensituation wird abhängig vom Nachrichteninhalt der jeweiligen Nachricht oder weiteren Nachrichteninhalten anderer Nachrichten identifiziert. Das Ermitteln der drohenden Gefahrensituation umfasst insbesondere ein Erkennen von drohenden Fahrzeugkollisionen. Auf diese Weise können Sicherheitsüberprüfungen beispielsweise nur dann durchgeführt werden, wenn eine Kollision in Betracht gezogen wird. Das heißt es erfolgt nur eine Sicherheitsüberprüfung der Nachrichten, die zum Erkennen der drohenden Kollision geführt haben. Somit können Sicherheitsüberprüfungen einzelner Nachrichten eingespart werden. Dessen ungeachtet kann jedoch eine zügige inhaltliche weitere Bearbeitung derartiger Nachrichten gewährleistet werden.

In einer weiteren vorteilhaften Ausgestaltung wird der Wert der Kenngröße der Priorität hinsichtlich der Sicherheitsüberprüfung einzelner Nachrichten stichprobenartig so verändert, dass eine Bearbeitung der jeweiligen Nachricht hinsichtlich der Sicherheitsüberprüfung der jeweiligen Nachricht der Bearbeitung der weiteren in dem Empfangspuffer befindlichen Nachrichten vorgezogen wird. Auf diese Weise können beispielsweise Nachrichten von Fahrzeugen, mit denen bislang keine oder mit geringer Wahrscheinlichkeit eine Kollision in Betracht gezogen wurde, möglicherweise in Abhängigkeit des Nachrichteninhalts doch im Hinblick einer Kollisionsgefahr als relevant eingestuft werden.

In einer weiteren vorteilhaften Ausgestaltung wird die Kenngröße der Priorität hinsichtlich der Sicherheitsüberprüfung der jeweiligen Nachricht in Abhängigkeit von einem Typ des Nachrichteninhalts ermittelt. Dies ermöglicht beispielsweise Nachrichten mit Unfallwarnungen bevorzugt im Vergleich zu Nachrichten mit Wetterinformationen zu bearbeiten. Dies steigert die Sicherheit im Straßenverkehr.

In einer weiteren vorteilhaften Ausgestaltung wird die Kenngröße der Priorität hinsichtlich der Sicherheitsüberprüfung der jeweiligen Nachricht in Abhängigkeit von einer Relevanz des Nachrichteninhalts für ein vorgegebenes geografisches Gebiet ermittelt. Das vorgegebene geografische Gebiet kann beispielsweise der eigene Aufenthaltsort mit nahe liegender Umgebung sein. Somit können Nachrichten für einen nahe liegenden Ort bevorzugt bearbeitet werden gegenüber Nachrichten, die sich auf weiter entfernte Orte beziehen. Auch können zum Beispiel die eigene Fahrtrichtung und Fahrgeschwindigkeit so ausgewertet werden, dass ein Gebiet, das in naher Zukunft befahren wird, ermittelt wird und Nachrichten, die sich auf dieses Gebiet beziehen, können bevorzugt bearbeitet werden. Ferner können für unterschiedliche Nachrichteninhalte unterschiedliche geografische Gebiete vorgegeben werden, zum Beispiel für Verkehrsflussinformationen ein größeres geografisches Gebiet als für sicherheitsrelevante Informationen.

In einer weiteren vorteilhaften Ausgestaltung wird die Kenngröße der Priorität hinsichtlich der Sicherheitsüberprüfung der jeweiligen Nachricht in Abhängigkeit von vorhandenen Informationen über das vorgegebene geografische Gebiet ermittelt. Insbesondere sind die Informationen unabhängig von der jeweiligen Nachricht vorhanden. Der Vorteil ist, dass so Nachrichten bevorzugt bearbeitet werden können, die sich auf ein geografisches Gebiet beziehen, über welches noch keine oder noch zu wenige Informationen vorliegen. Dies kann unabhängig von der sonstigen Art des Nachrichteninhalts der jeweiligen Nachricht erfolgen.

In einer weiteren vorteilhaften Ausgestaltung wird die Kenngröße der Priorität hinsichtlich der Sicherheitsüberprüfung der jeweiligen Nachricht in Abhängigkeit von Sensordaten von zumindest einem Sensor ermittelt, welcher der Nachrichtenbearbeitungsvorrichtung zugeordnet ist. Der Sensor ist zum Beispiel ein Sensor zur Bestimmung einer Fahrgeschwindigkeit eines Fahrzeugs. Somit ist es beispielsweise möglich, empfangene Nachrichten, die nur schon durch Sensordaten bekannte Nachrichteninhalte aufweisen, zu einem späteren Zeitpunkt zu bearbeiten. Zum Beispiel kann so eine eingehende Stauwarnung mit niedrigerer Priorität bearbeitet werden, wenn das Fahrzeug bereits steht oder sich nur mit geringer Geschwindigkeit, z.B. weniger als 10 km/h, bewegt.

In einer weiteren vorteilhaften Ausgestaltung wird die Kenngröße der Priorität der Sicherheitsüberprüfung der jeweiligen Nachricht in Abhängigkeit von einem Unterschied des Nachrichteninhalts zu weiteren Nachrichteninhalten der in dem Empfangspuffer abgelegten Nachrichten ermittelt. Auf diese Weise können mehrere unbearbeitete Nachrichten mit ähnlichem Nachrichteninhalt zusammengefasst werden, von denen einzelne Nachrichten in der weiteren Nachrichtenbearbeitung bevorzugt werden. Ähnliche Nachrichteninhalte liegen beispielsweise vor, falls sie im gleichen Kontext stehen.

In einer weiteren vorteilhaften Ausgestaltung wird die Kenngröße der Priorität hinsichtlich der Sicherheitsüberprüfung der jeweiligen Nachricht in Abhängigkeit von einem vorgegebenen Sendertyp ermittelt. Auf diese Weise können Nachrichten von einem bestimmten Sendertyp bevorzugt bearbeitet werden. Zum Beispiel können Nachrichten von örtlich feststehenden Sendeeinheiten, die beispielsweise sogenannte Road Side Units sein können, bevorzugt bearbeitet werden.

In einer weiteren vorteilhaften Ausgestaltung wird der Wert der Kenngröße der Priorität hinsichtlich der Sicherheitsüberprüfung einzelner Nachrichten so verändert, dass eine Bearbeitung der jeweiligen Nachricht hinsichtlich der Sicherheitsüberprüfung der jeweiligen Nachricht, falls der Sendertyp der Nachricht eine örtlich feststehende Sendeeinheit ist, der Bearbeitung der weiteren in dem Empfangspuffer befindlichen Nachrichten vorgezogen wird, falls der Sendertyp der Nachrichten eine mobile Sendeeinheit ist. Auf diese Weise können Nachrichten einer örtlich feststehenden Sendeeinheit, wie beispielsweise einer Road Side Unit, bevorzugt gegenüber den von anderen Fahrzeugen gesendeten Nachrichten bearbeitet werden.

In einer weiteren vorteilhaften Ausgestaltung werden in Abhängigkeit der Speicherkapazität des Empfangspuffers die in dem Empfangspuffer befindlichen Nachrichten abhängig von den Werten der Kenngröße der Priorität hinsichtlich der Sicherheitsüberprüfung der Nachrichten verworfen. Bevorzugt werden Nachrichten mit niedrigster Priorität beginnend verworfen, wenn ein erster vorgegebener Schwellenwert einer Anzahl an in dem Empfangspuffer befindlicher Nachrichten überschritten wird. Der erste Schwellenwert ist beispielsweise so gewählt, dass 90% der Speicherkapazität des Empfangspuffers durch die in diesem befindlichen Nachrichten belegt sind. Auf diese Weise kann die Sicherheitsüberprüfung einzelner Nachrichten eingespart werden. Dies ermöglicht ein schnelles und gleichzeitig zuverlässiges Bearbeiten der Nachrichten.

In einer weiteren vorteilhaften Ausgestaltung werden in Abhängigkeit von der Auslastung einer ersten Recheneinheit der Nachrichtenbearbeitungsvorrichtung die in dem Empfangspuffer befindlichen Nachrichten abhängig von den Werten der Kenngröße der Priorität hinsichtlich der Sicherheitsüberprüfung der Nachrichten verworfen. Bevorzugt werden Nachrichten mit niedrigster Priorität beginnend verworfen, wenn die Auslastung der ersten Recheneinheit der Nachrichtenbearbeitungsvorrichtung einen zweiten vorgegebenen Schwellenwert überschreitet. Der zweite Schwellenwert ist beispielsweise so gewählt, dass 90% der ersten Recheneinheit der Nachrichtenbearbeitungsvorrichtung ausgelastet sind. Auf diese Weise kann die Sicherheitsüberprüfung einzelner Nachrichten eingespart werden. Dies ermöglicht ein schnelles und gleichzeitig zuverlässiges Bearbeiten der Nachrichten.

In einer weiteren vorteilhaften Ausgestaltung wird die Nachrichtenbearbeitung hinsichtlich der Sicherheitsüberprüfung in Abhängigkeit von dem zumindest einen Authentifizierungselement der jeweiligen Nachricht nur in reduzierter Form durchgeführt. Auf diese Weise können Sicherheitsüberprüfungen beispielsweise bei zumindest einem bekannten, also insbesondere bereits anderweitig überprüften Authentifizierungselement, wie beispielsweise dem digitalen Zertifikat, vereinfacht durchgeführt werden. Es kann so vorteilhaft darauf verzichtet werden, eine Zertifikatskette oder Teile davon zu prüfen. Dies ermöglicht ein schnelles und zuverlässiges Bearbeiten der Nachrichten.

In einer weiteren vorteilhaften Ausgestaltung wird eine Kenngröße einer Priorität hinsichtlich des Nachrichteninhalts der jeweiligen Nachricht abhängig von dem Nachrichteninhalt ermittelt. Die Bearbeitungsfolge für die weitere Nachrichtenbearbeitung der in dem Empfangspuffer befindlichen Nachrichten wird abhängig von den Werten der Kenngröße der Priorität hinsichtlich der Sicherheitsüberprüfung und der Kenngröße der Priorität hinsichtlich des Nachrichteninhalts der Nachrichten festgelegt und durchgeführt. Das Ermitteln der Kenngröße der Priorität hinsichtlich des Nachrichteninhalts abhängig vom Nachrichteninhalt beinhaltet insbesondere eine Vorverarbeitung des Nachrichteninhalts. Die Vorverarbeitung des Nachrichteninhalts umfasst beispielsweise ein Ermitteln des Senders und/oder von Stichworten des Nachrichteninhalts. Auf diese Weise können Nachrichteninhalte in Abhängigkeit ihres Nachrichteninhalts bevorzugt bearbeitet werden, und zwar insbesondere unabhängig von ihrer Priorität hinsichtlich der Sicherheitsüberprüfung. In der Regel erfolgt die weitere inhaltliche Nachrichtenbearbeitung einer Nachricht auch im Rahmen der Sicherheitsüberprüfung. Auf diese Weise sind eine schnelle Bearbeitung der Nachrichten und gleichzeitig eine akkurate Erfassung der Umgebung möglich.

In einer weiteren vorteilhaften Ausgestaltung wird die Kenngröße der Priorität hinsichtlich des Nachrichteninhalts der jeweiligen Nachricht in Abhängigkeit von dem Unterschied des Nachrichteninhalts zu den weiteren Nachrichteninhalten der im Empfangspuffer abgelegten Nachrichten ermittelt. Auf diese Weise können mehrere unbearbeitete Nachrichten mit ähnlichem Nachrichteninhalt zusammengefasst werden, von denen einzelne Nachrichten in der weiteren Nachrichtenbearbeitung hinsichtlich des Nachrichteninhalts bevorzugt werden. Ähnliche Nachrichteninhalte liegen beispielsweise vor, falls sie im gleichen Kontext stehen.

In einer weiteren vorteilhaften Ausgestaltung wird die Kenngröße der Priorität hinsichtlich des Nachrichteninhalts der jeweiligen Nachricht in Abhängigkeit von einem vorgegebenen Sendertyp ermittelt. Auf diese Weise können Nachrichten eines bestimmten Sendertyps bevorzugt bearbeitet werden, beispielsweise Nachrichten von örtlich feststehenden Sendeeinheiten.

Erfindungsgemäß wird die Kenngröße der Priorität hinsichtlich des Nachrichteninhalts der jeweiligen Nachricht in Abhängigkeit von zumindest einem Authentifizierungselement der jeweiligen Nachricht ermittelt. Dies hat den Vorteil, dass Nachrichten beispielsweise eines bekannten Senders bevorzugt bearbeitet werden können.

In einer weiteren vorteilhaften Ausgestaltung werden in Abhängigkeit der Speicherkapazität des Empfangspuffers die in dem Empfangspuffer befindlichen Nachrichten abhängig von den Werten der Kenngröße der Priorität hinsichtlich des Nachrichteninhalts der Nachrichten verworfen. Insbesondere werden Nachrichten mit niedrigster Priorität beginnend verworfen. Auf diese Weise kann eine Bearbeitung einzelner Nachrichten hinsichtlich des Nachrichteninhalts eingespart werden. Dies ermöglicht ein schnelles und gleichzeitig zuverlässiges Bearbeiten der übrigen Nachrichten.

In einer weiteren vorteilhaften Ausgestaltung werden in Abhängigkeit von der Auslastung der ersten Recheneinheit der Nachrichtenbearbeitungsvorrichtung die in dem Empfangspuffer befindlichen Nachrichten abhängig von den Werten der Kenngröße der Priorität hinsichtlich des Nachrichteninhalts der Nachrichten verworfen. Bevorzugt werden Nachrichten mit niedrigster Priorität beginnend verworfen. Auf diese Weise kann die Sicherheitsüberprüfung einzelner Nachrichten eingespart werden. Dies ermöglicht ein schnelles und gleichzeitig zuverlässiges Bearbeiten der Nachrichten.

In einer weiteren vorteilhaften Ausgestaltung umfasst die Nachrichtenbearbeitungsvorrichtung zum Bearbeiten der jeweiligen Nachricht die erste Recheneinheit und ein Sicherheitsmodul mit einer weiteren Recheneinheit. Die Nachrichtenbearbeitungsvorrichtung ist ausgebildet, abhängig von den Werten der Kenngröße der Priorität hinsichtlich der Sicherheitsüberprüfung der jeweiligen Nachricht die Nachrichtenbearbeitung der jeweiligen Nachricht hinsichtlich der Sicherheitsüberprüfung in der ersten Recheneinheit oder in dem Sicherheitsmodul durchzuführen. Dies hat den Vorteil, dass beispielsweise als bevorzugt eingestufte Nachrichten auf dem Sicherheitsmodul hinsichtlich der Sicherheitsüberprüfung bearbeitet werden können, während andere kapazitätsabhängig auch bezüglich der Sicherheitsüberprüfung in der ersten Recheneinheit bearbeitet werden können.

Gemäß eines zweiten Aspekts zeichnet sich die Erfindung aus durch eine Nachrichtenbearbeitungsvorrichtung zum Bearbeiten von Nachrichten, wobei eine jeweilige Nachricht zumindest ein Authentifizierungselement und einen Nachrichteninhalt umfasst. Die Nachrichtenbearbeitungsvorrichtung weist zumindest einen Empfangspuffer auf und empfängt die jeweilige Nachricht, legt die jeweilige Nachricht in zumindest einem Empfangspuffer ab und ermittelt eine Kenngröße einer Priorität hinsichtlich einer Sicherheitsüberprüfung der jeweiligen Nachricht abhängig von dem Nachrichteninhalt. Eine Bearbeitungsfolge für eine weitere Nachrichtenbearbeitung hinsichtlich der Sicherheitsüberprüfung unter Berücksichtigung des jeweiligen zumindest einen Authentifizierungselements der in dem Empfangspuffer befindlichen Nachrichten abhängig von den Werten der Kenngröße der Priorität hinsichtlich der Sicherheitsüberprüfung der Nachrichten wird von der Nachrichtenbearbeitungsvorrichtung festgelegt und durchgeführt. Auf diese Weise können Nachrichten in Abhängigkeit ihres Nachrichteninhalts bevorzugt bearbeitet werden hinsichtlich ihrer Sicherheitsüberprüfung. Der Vorteil ist eine schnelle Nachrichtenbearbeitung und gleichzeitig eine akkurate Erfassung der Umgebung.

Erfindungsgemäß umfasst die Nachrichtenbearbeitungsvorrichtung zumindest eine erste Recheneinheit und zumindest ein Sicherheitsmodul mit zumindest einer weiteren Recheneinheit. Die Nachrichtenbearbeitungsvorrichtung ist ausgebildet zum Durchführen der Nachrichtenbearbeitung hinsichtlich der Sicherheitsüberprüfung der jeweiligen Nachricht in der ersten Recheneinheit oder in dem Sicherheitsmodul abhängig von den Werten der Kenngröße der Priorität hinsichtlich der Sicherheitsüberprüfung der jeweiligen Nachricht. Dies hat den Vorteil, dass beispielsweise als bevorzugt eingestufte Nachrichten auf dem Sicherheitsmodul hinsichtlich der Sicherheitsüberprüfung bearbeitet werden können, wobei die Kenngröße (P_S) der Priorität hinsichtlich der Sicherheitsüberprüfung (S) der jeweiligen Nachricht (N) in Abhängigkeit von mindestens einem Authentifizierungselement (A) der jeweiligen Nachricht (N) und in Abhängigkeit eines. Ermittelns einer drohenden Gafahrensituation (GS) ermittelt wird, die abhängig vom Nachrichteninhalt (I) der jeweiligen Nachricht (N) oder weiteren Nachrichteninhalten (I_EP) anderer Nachrichten (N_EP) identifiziert wird.

Ausführungsbeispiele der Erfindung sind im Folgenden anhand der schematischen Zeichnungen erläutert. Es zeigen:
- Figur 1: ein System,
- Figur 2: eine Nachrichtenbearbeitungsvorrichtung,
- Figur 3: ein schematischer Aufbau einer Nachricht,
- Figur 4: ein schematischer Aufbau einer Nachricht,
- Figur 5: ein schematischer Aufbau einer Nachricht,
- Figur 6: ein Ablaufdiagramm eines Programms zum Empfangen von Nachrichten und Ermitteln von Kenngrößen von Prioritäten,
- Figur 7: ein Ablaufdiagramm eines Programms zum Bearbeiten von empfangenen Nachrichten mittels Kenngrößen von Prioritäten und
- Figur 8: ein Ablaufdiagramm eines Programms zum Verwerfen von empfangenen Nachrichten anhand von Kenngrößen von Prioritäten.

Elemente gleicher Konstruktion oder Funktion sind figuren-übergreifend mit den gleichen Bezugszeichen versehen.

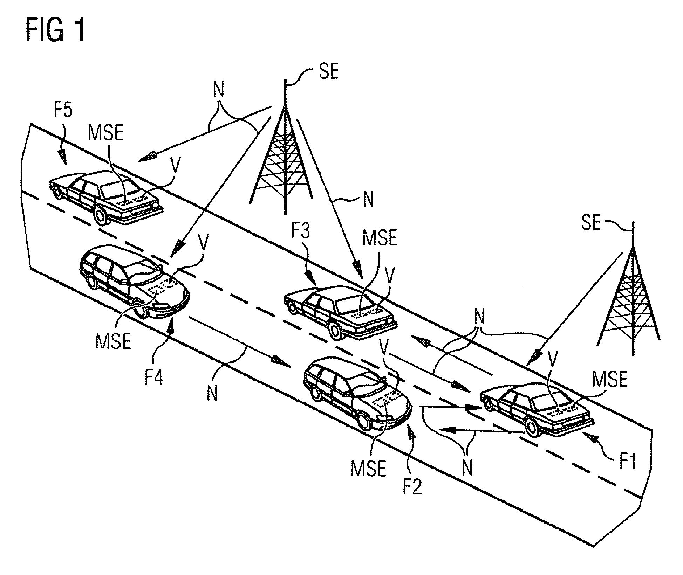

Figur 1 zeigt ein System aus Sendeeinheiten SE, MSE und Empfangseinheiten. Sendeeinheiten können mobile Sendeeinheiten MSE oder örtlich feststehende Sendeeinheiten SE sein. Beispielsweise ist die Empfangseinheit ausgebildet, eine Verarbeitung von Nachrichten N durchzuführen. In Figur 1 sind beispielsweise ein erstes Fahrzeug F1, ein zweites Fahrzeug F2, ein drittes Fahrzeug F3, ein viertes Fahrzeug F4 und ein fünftes Fahrzeug F5 abgebildet, die jeweils eine Nachrichtenbearbeitungsvorrichtung V zum Empfangen und Bearbeiten von Nachrichten N umfassen. Vielmehr können in Fahrzeugen auch mobile Sendeeinheiten MSE angeordnet sein. Die Fahrzeuge F1 bis F5 empfangen Nachrichten N von örtlich feststehenden Sendeeinheiten SE und den anderen Fahrzeugen, die mobile Sendeeinheiten MSE umfassen. Örtlich feststehende Sendeeinheiten SE sind beispielsweise Road Side Units und mobile Sendeeinheiten MSE sind beispielsweise On Board Units. Die örtlich feststehenden Sendeeinheiten SE sind räumlich voneinander beabstandet angeordnet, zum Beispiel entlang einer Straße. Beispielsweise umfasst die On Board Unit die Nachrichtenbearbeitungsvorrichtung V. Die Nachrichtenbearbeitungsvorrichtungen V sind ausgebildet, Nachrichten N, welche zumindest ein Authentifizierungselement A und einen Nachrichteninhalt I umfassen, zu empfangen. Die Nachricht N ist beispielsweise eine Wireless Short Message-Nachricht, welche von einem Fahrzeug per Funk empfangen wird und beispielsweise Verkehrsflussinformationen, Glatteis- oder Unfallwarnungen umfasst. Um eine Sicherheitsüberprüfung S der Nachricht N zu ermöglichen, umfasst die Nachricht N zusätzlich zum Nachrichteninhalt I mindestens das eine Authentifizierungselement A. Das Authentifizierungselement A kann eine kryptographische Prüfsumme PR (Message Authentication Code) und/oder eine digitale Signatur SIG und/oder ein digitales Zertifikat CERT und/oder eine Zertifikatskette umfassen. Beispielsweise lässt sich durch die digitale Signatur SIG ein Sendertyp STYP identifizieren, z.B. örtlich feststehende Sendeeinheit SE oder mobile Sendeeinheit MSE, oder die Integrität der signierten, elektronischen Daten prüfen. Dadurch können zum Beispiel Manipulationen an Unfallwarnungen oder Verkehrsflussinformationen erkannt werden, und die Fahrweise oder Streckenführung des Fahrzeugs kann in Abhängigkeit davon in zuverlässiger Weise angepasst werden.

In dem in Figur 1 gezeigten Beispiel empfangen die Nachrichtenbearbeitungsvorrichtungen V des ersten Fahrzeugs F1 und des dritten Fahrzeugs F3 jeweils Nachrichten N von der örtlich feststehenden Sendeeinheit SE und von den anderen mobilen Sendeeinheiten MSE. Die Nachrichtenbearbeitungsvorrichtung V des zweiten Fahrzeugs F2 empfängt nur Nachrichten N von anderen mobilen Sendeeinheiten MSE. Die Nachrichtenbearbeitungsvorrichtungen V des vierten Fahrzeugs F4 und des fünften Fahrzeugs F5 empfangen Nachrichten N nur von der örtlich feststehenden Sendeeinheit SE.

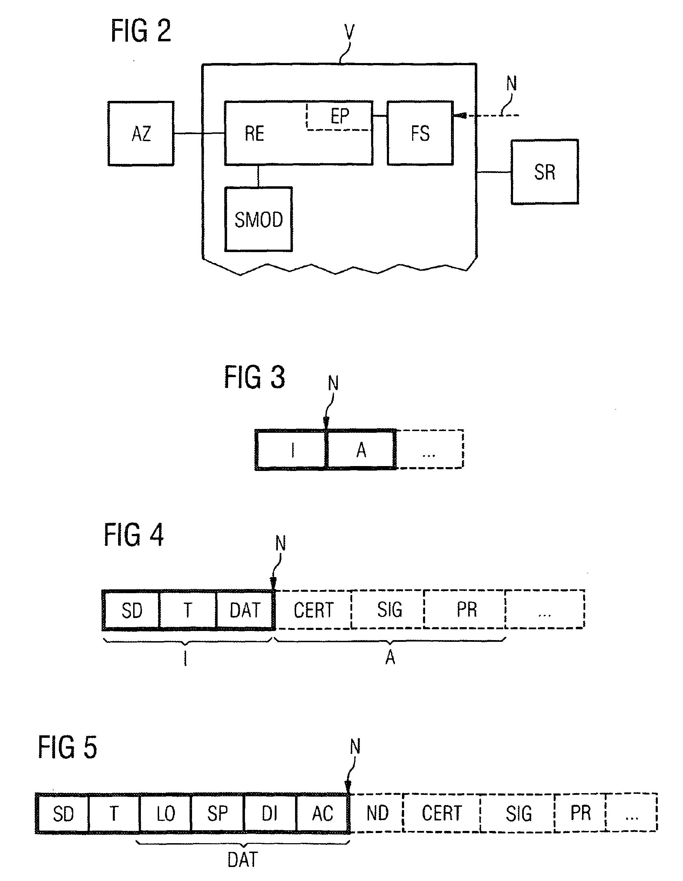

Figur 2 zeigt die Nachrichtenbearbeitungsvorrichtung V zum Bearbeiten von Nachrichten N. Die Nachrichtenbearbeitungsvorrichtung V umfasst zumindest einen Empfangspuffer EP. Bevorzugt ist der Nachrichtenbearbeitungsvorrichtung V auch eine mobile Sendeeinheit MSE zugeordnet oder sie umfasst eine solche. Die mobile Sendeeinheit MSE ist beispielsweise die On Board Unit eines Fahrzeugs. Zum Beispiel ist die Nachricht N eine Wireless Short Message-Nachricht, welche per Funk durch eine Funkschnittstelle FS der Nachrichtenbearbeitungsvorrichtung V empfangen wird. Die Nachricht N wird durch die Nachrichtenbearbeitungsvorrichtung V in dem Empfangspuffer EP abgelegt. In dem in Figur 2 gezeigten Beispiel umfasst die Nachrichtenbearbeitungsvorrichtung V zumindest eine erste Recheneinheit RE und zumindest ein Sicherheitsmodul SMOD mit zumindest einer weiteren Recheneinheit. Die Nachrichtenbearbeitungsvorrichtung V ist ausgebildet zum Durchführen der Nachrichtenbearbeitung hinsichtlich der Sicherheitsüberprüfung S der jeweiligen Nachricht N in der ersten Recheneinheit RE oder in dem Sicherheitsmodul SMOD. Der Nachrichtenbearbeitungsvorrichtung V ist zumindest ein Sensor SR zugeordnet, der beispielsweise der Ermittlung einer Geschwindigkeit des Fahrzeugs, einer Umgebungstemperatur oder von Wassertropfen auf einer Windschutzscheibe dient. Der Nachrichtenbearbeitungsvorrichtung V ist beispielsweise eine Anzeigeeinheit AZ zugeordnet, auf der Informationen ausgegeben werden können, zum Beispiel ein Warnhinweis auf Glatteis oder Unfall.

Figur 3 zeigt einen beispielhaften schematischen Aufbau der Nachricht N. Die Nachricht N ist beispielsweise eine Wireless Short Message- Nachricht und weist Felder unterschiedlicher Elemente auf. Die Nachricht N umfasst zumindest das eine Authentifizierungselement A und den Nachrichteninhalt I. Das Fahrzeug erhält zum Beispiel per Funk Nachrichten N von anderen Fahrzeugen, den mobilen Sendeeinheiten MSE, oder von örtlich feststehenden Sendeeinheiten SE, bei welchen der Nachrichteninhalt beispielsweise Verkehrsflussinformationen, Glatteis- oder Unfallwarnungen umfassen kann. Auch ist anhand des Nachrichteninhalts I der Sender der Nachricht N erkennbar. Das Authentifizierungselement A kann die kryptographische Prüfsumme PR (Message Authentication Code) und/oder die digitale Signatur SIG und/oder das digitale Zertifikat CERT und/oder die Zertifikatskette umfassen und ermöglicht in der Sicherheitsüberprüfung S das Prüfen der elektronischen Daten der Nachricht N und das Erkennen von Manipulationen der Nachricht N. Auch kann die Nachricht N zusätzlich zu dem Authentifizierungselement A und dem Nachrichteninhalt I weitere Elemente umfassen. Ferner kann auch eine Reihenfolge der Elemente in der Nachricht N eine andere sein als in der Figur 3 dargestellt.

Figur 4 zeigt den detaillierten, beispielhaften schematischen Aufbau der Nachricht N. Die Nachricht N umfasst den Nachrichteninhalt I und das Authentifizierungselement A, wobei der Nachrichteninhalt I bevorzugt einen Sender SD, einen Sendezeitpunkt T und Daten über den Sender DAT umfasst. Bevorzugt, jedoch nicht grundsätzlich notwendig, liegt der Nachrichteninhalt I der Nachricht N unverschlüsselt vor. Das Authentifizierungselement A umfasst die kryptographische Prüfsumme PR (Message Authentication Code) und/oder die digitale Signatur SIG und/oder das digitale Zertifikat CERT und/oder die Zertifikatskette, wobei bevorzugt die digitale Signatur SIG enthalten ist. Dies ermöglicht die Sicherheitsüberprüfung S der Nachricht N. Zunächst wählt der Sender den zu signierenden Nachrichteninhalt I aus. Eine Signaturerstellungseinheit des Senders bildet über den Nachrichteninhalt einen Hash-Wert (Prüfsumme) und bildet aus dem Hash-Wert mit Hilfe eines geheimen Signaturschlüssels die digitale Signatur SIG. Der Sender verschickt den Nachrichteninhalt I und zumindest ein Authentifizierungselement A, hier beispielsweise die digitale Signatur SIG. Der Empfänger erhält den Nachrichteninhalt I und das Authentifizierungselement A. In der Sicherheitsüberprüfung S der Nachricht N verifiziert der Empfänger die digitale Signatur SIG mit Hilfe eines öffentlichen Schlüssels, der jedem bekannt sein darf und mit der digitalen Signatur SIG mitgeliefert werden kann und zum geheimen Signaturschlüssel korrespondiert. Für jede verschlüsselte Übermittlung benötigt der Sender somit den öffentlichen Schlüssel des Empfängers. Es sollte jedoch sichergestellt sein, dass es sich tatsächlich um den Schlüssel des Empfängers handelt und nicht um die Fälschung eines Betrügers. Hierzu dienen digitale Zertifikate CERT, welche die Authentizität eines öffentlichen Schlüssels und seinen zulässigen Anwendungs- und Geltungsbereich bestätigen. Auch kann der Empfänger anhand des digitalen Zertifikats CERT den öffentlichen Schlüssel einer Identität (z. B. einer Person, einer Organisation) zuordnen und diese bestätigen. Das digitale Zertifikat CERT ist selbst durch eine weitere digitale Signatur geschützt, deren Echtheit mit dem öffentlichen Schlüssel des Ausstellers des Zertifikates geprüft werden kann. Um die Authentizität des Aussteller-Schlüssels zu prüfen, wird wiederum ein digitales Zertifikat benötigt. Auf diese Weise lässt sich eine Kette von digitalen Zertifikaten aufbauen, eine Zertifikatskette, die jeweils die Authentizität des öffentlichen Schlüssels bestätigt, mit dem das vorhergehende Zertifikat geprüft werden kann. Auf die Echtheit des letzten Zertifikates müssen sich die Kommunikationspartner aber ohne ein weiteres Zertifikat verlassen können. Somit ist eine oberste Zertifizierungsstelle vorausgesetzt, der alle teilnehmenden Parteien vertrauen. Die digitalen Zertifikate werden bevorzugt durch vertrauenswürdige Organisationen oder Stellen ausgestellt, damit die Anwender sich auf die in den Zertifikaten enthaltenen Informationen verlassen können. Ist die Prüfung der digitalen Signatur SIG erfolgreich, dann wurde der Nachrichteninhalt I nicht verändert (Integrität) und der Sender wurde verifiziert (Authentifizierung). Durch die digitale Signatur SIG lässt sich also der Sender identifizieren und die Integrität der signierten, elektronischen Daten prüfen. Ist dem Sender mit einem digitalen Zertifikat CERT der öffentliche Schlüssel zugewiesen worden, kann der Sender anhand seines öffentlichen Schlüssels über ein beispielsweise im Internet verfügbares Zertifikatsverzeichnis identifiziert werden.

Auch andere dem Fachmann bekannte Sicherheitsüberprüfungen S der Nachricht N anhand des Authentifizierungselements A sind denkbar.

Die Nachricht N kann auch weitere Elemente umfassen. Ferner kann auch die Reihenfolge der Elemente in der Nachricht N eine andere sein als in der Figur 4 dargestellt.

Figur 5 zeigt den weiter detaillierten, beispielhaften schematischen Aufbau der Nachricht N. Die Nachricht N umfasst bevorzugt den Sender SD, den Sendezeitpunkt T, einen Ort LO, eine Geschwindigkeit SP, eine Fahrtrichtung DI und eine Beschleunigung AC, wobei der Ort LO, die Geschwindigkeit SP, die Fahrtrichtung DI und die Beschleunigung AC die Daten über den Sender DAT bilden. Zusätzlich kann der Nachrichteninhalt I auch Nutzdaten ND aufweisen. Die Nutzdaten ND sind beispielsweise Verkehrsflussinformationen oder sicherheitsrelevante Informationen, z.B. eine Glatteiswarnung oder eine Unfallwarnung. Durch die Nutzdaten ND insbesondere von Wireless Short Message- Nachrichten können beispielsweise Fahrzeuge durch vorausfahrende oder entgegenkommende Fahrzeuge gewarnt werden, beispielsweise vor gefährlichen Situationen aufgrund von Glätte, schlechter Sicht oder Hindernissen auf der Fahrbahn. Dies ermöglicht eine präventive Unfallvermeidung. Bevorzugt liegt der Nachrichteninhalt I der Nachricht N unverschlüsselt vor. Außerdem umfasst das Authentifizierungselement A der Nachricht N die kryptographische Prüfsumme PR (Message Authentication Code) und/oder das digitale Zertifikat CERT und/oder die digitale Signatur SIG und/oder die Zertifikatskette.

Die Nachricht N kann auch weitere Elemente umfassen. Ferner kann auch die Reihenfolge der Elemente in der Nachricht N eine andere sein als in der Figur 5 dargestellt.

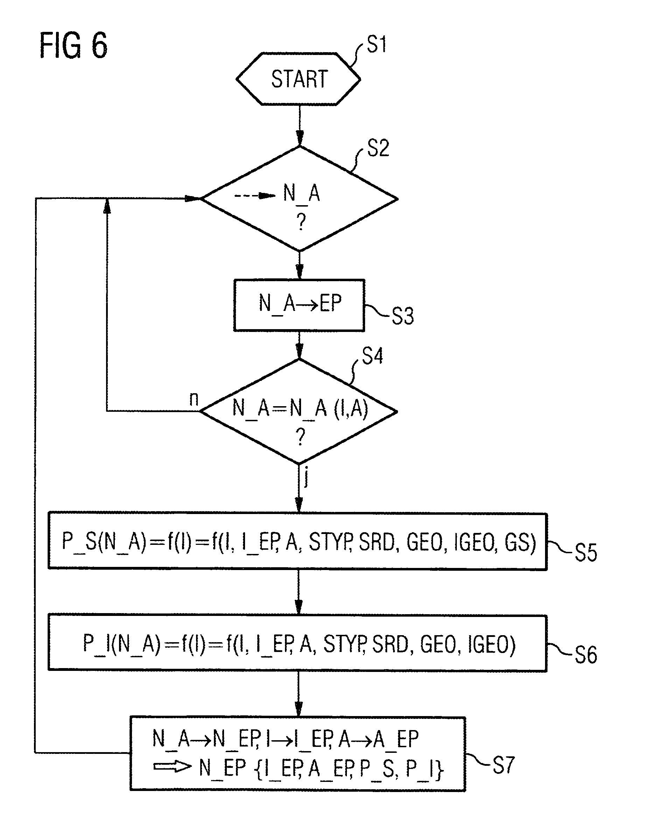

Figur 6 zeigt ein Ablaufdiagramm eines Programms zum Empfangen der Nachrichten N und Ermitteln von Kenngrößen von Prioritäten, das in der jeweiligen Nachrichtenbearbeitungsvorrichtung V während deren Betriebs abgearbeitet wird. Das Programm beginnt in einem Schritt S1. Falls in einem Schritt S2 eine aktuelle Nachricht N_A empfangen wird, wird in einem Schritt S3 die aktuelle Nachricht N_A in dem Empfangspuffer EP abgelegt. In einem Schritt S4 wird überprüft, ob die aktuelle Nachricht N_A den Nachrichteninhalt I und zumindest das eine Authentifizierungselement A umfasst. Ist dies nicht der Fall, wird erneut der Schritt S2 abgearbeitet. Weist die aktuelle Nachricht N_A den Nachrichteninhalt I und das Authentifizierungselement A auf, so wird in einem Schritt S5 eine Kenngröße P_S einer Priorität hinsichtlich der Sicherheitsüberprüfung S der aktuellen Nachricht N_A abhängig von dem Nachrichteninhalt I ermittelt. Durch das Ermitteln der Kenngröße P_S der Priorität hinsichtlich der Sicherheitsüberprüfung S wird das Festlegen einer Bearbeitungsfolge möglich und eine Bearbeitung der aktuellen Nachricht N_A an bestimmte Voraussetzungen anpassbar. Das Ermitteln der Kenngröße P_S der Priorität hinsichtlich der Sicherheitsüberprüfung S abhängig vom Nachrichteninhalt I umfasst insbesondere eine Vorverarbeitung des Nachrichteninhalts I. Die Vorverarbeitung des Nachrichteninhalts I umfasst beispielsweise ein Ermitteln des Senders SD und/oder von Stichworten des Nachrichteninhalts I.

Die Kenngröße P_S der Priorität hinsichtlich der Sicherheitsüberprüfung S der aktuellen Nachricht N_A wird bevorzugt in Abhängigkeit von dem Authentifizierungselement A der aktuellen Nachricht N_A ermittelt. Da zum Beispiel durch die digitale Signatur SIG der Sender SD identifizierbar ist, ermöglicht dies die Sicherheitsüberprüfung S in Abhängigkeit von bereits bekannten Sendern SD durchzuführen. Das heißt bei bekannten Sendern SD kann die Sicherheitsüberprüfung SD eventuell auf einen späteren Zeitpunkt verschoben werden und andere Sicherheitsüberprüfungen S von Nachrichten N mit unbekannten Sendern SD können bevorzugt werden. Insbesondere wird die Kenngröße P_S der Priorität hinsichtlich der Sicherheitsüberprüfung S der aktuellen Nachricht N_A in Abhängigkeit von einem vorgegebenen Sendertyp STYP ermittelt. Auf diese Weise können Nachrichten von einem bestimmten Sendertyp STYP bevorzugt bearbeitet werden. Zum Beispiel ist anhand des digitalen Zertifikats CERT feststellbar, ob der Sender der aktuellen Nachricht N_A die mobile Sendeeinheit MSE oder die örtlich feststehende Sendeeinheit SE ist. Insbesondere wird der aktuellen Nachricht N_A, falls der Sender STYP eine örtlich feststehende Sendeeinheit SE ist, eine Kenngröße P_S der Priorität hinsichtlich der Sicherheitsüberprüfung S zugeordnet, die die bevorzugte Bearbeitung im Vergleich zu den im Empfangspuffer EP befindlichen Nachrichten N_EP bewirkt, welche von einer mobilen Sendeeinheit MSE gesendet wurden. Bevorzugt sind in diesem Beispiel die örtlich feststehende Sendeeinheit SE eine Road Side Unit und die mobile Sendeeinheit MSE eine On Board Unit eines Fahrzeugs.

Auch kann die Kenngröße P_S der Priorität hinsichtlich der Sicherheitsüberprüfung S der aktuellen Nachricht N_A in Abhängigkeit einer drohenden Gefahrensituation GS ermittelt werden. Die drohende Gefahrensituation wird abhängig vom Nachrichteninhalt I der aktuellen Nachricht N_A oder weiteren Nachrichteninhalten anderer Nachrichten N identifiziert. Das Ermitteln der drohenden Gefahrensituation GS umfasst insbesondere ein Erkennen von drohenden Fahrzeugkollisionen. Auf diese Weise können Sicherheitsüberprüfungen S beispielsweise nur dann durchgeführt werden, wenn eine Kollision in Betracht gezogen wird. Insbesondere wird der aktuellen Nachricht N_A, falls eine Kollision in Betracht gezogen wird, eine Kenngröße P_S der Priorität hinsichtlich der Sicherheitsüberprüfung S zugeordnet, die die bevorzugte Bearbeitung im Vergleich zu den im Empfangspuffer EP befindlichen Nachrichten N_EP bewirkt. Das heißt es erfolgt bevorzugt nur eine Sicherheitsüberprüfung S der Nachrichten N, die zum Erkennen der drohenden Kollision geführt haben.

Des Weiteren kann der Wert der Kenngröße P_S der Priorität hinsichtlich der Sicherheitsüberprüfung S einzelner Nachrichten N stichprobenartig so verändert werden, dass eine Bearbeitung der aktuellen Nachricht N_A hinsichtlich der Sicherheitsüberprüfung S der Bearbeitung von weiteren in dem Empfangspuffer EP befindlichen Nachrichten N_EP vorgezogen wird. Auf diese Weise können beispielsweise Nachrichten N von Fahrzeugen, mit denen bislang keine oder mit geringer Wahrscheinlichkeit eine Kollision in Betracht gezogen wurde, möglicherweise in Abhängigkeit des Nachrichteninhalts I doch im Hinblick einer Kollisionsgefahr als relevant eingestuft werden.

Bevorzugt wird die Kenngröße der Priorität P_S hinsichtlich der Sicherheitsüberprüfung der aktuellen Nachricht N_A in Abhängigkeit von einem Typ des Nachrichteninhalts I ermittelt. Dies ermöglicht beispielsweise die aktuelle Nachricht N_A, falls diese eine Unfallwarnung enthält, bevorzugt zu bearbeiten im Vergleich zu im Empfangspuffer EP befindlichen Nachrichten N_EP mit Wetterinformationen. Dies steigert die Sicherheit im Straßenverkehr.

Die Kenngröße der Priorität P_S hinsichtlich der Sicherheitsüberprüfung S der aktuellen Nachricht N_A wird insbesondere in Abhängigkeit von einer Relevanz des Nachrichteninhalts I für ein vorgegebenes geografisches Gebiet GEO ermittelt. Das vorgegebene geografische Gebiet GEO kann beispielsweise der Aufenthaltsort des Empfängers mit nahe liegender Umgebung sein. Somit kann die aktuelle Nachricht N_A bevorzugt bearbeitet werden gegenüber den im Empfangspuffer EP befindlichen Nachrichten N_EP, die sich auf weiter entfernte Orte beziehen. Auch kann zum Beispiel die Fahrtrichtung und Fahrgeschwindigkeit des Empfängers so ausgewertet werden, dass ein Gebiet ermittelt wird, das in naher Zukunft befahren wird, und Nachrichten N, die sich auf dieses Gebiet beziehen, können bevorzugt bearbeitet werden. Ferner können für unterschiedliche Arten von Nachrichteninhalten I unterschiedliche geografische Gebiete GEO vorgegeben werden, zum Beispiel für Verkehrsflussinformationen ein größeres geografisches Gebiet GEO als für sicherheitsrelevante Informationen.

Bevorzugt wird die Kenngröße der Priorität P_S hinsichtlich der Sicherheitsüberprüfung S der aktuellen Nachricht N_A in Abhängigkeit von vorhandenen Informationen IGEO über das vorgegebene geografische Gebiet GEO ermittelt. Insbesondere sind die Informationen IGEO unabhängig von der aktuellen Nachricht N_A vorhanden. Der Vorteil ist, dass somit die aktuelle Nachricht N_A bevorzugt bearbeitet werden kann, falls diese sich auf ein geografisches Gebiet GEO bezieht, über welches noch keine oder noch zu wenige Informationen IGEO vorliegen. Dies kann unabhängig von der sonstigen Art des Nachrichteninhalts I der aktuellen Nachricht N_A erfolgen.

Des Weiteren kann die Kenngröße P_S der Priorität hinsichtlich der Sicherheitsüberprüfung S der aktuellen Nachricht N_A in Abhängigkeit von Sensordaten SRD von zumindest einem Sensor SR ermittelt werden, welcher der Nachrichtenbearbeitungsvorrichtung V zugeordnet ist. Der Sensor SR ist zum Beispiel ein Sensor, der die Geschwindigkeit oder eine Umgebungstemperatur des Fahrzeugs ermittelt, welches die aktuelle Nachricht N_A empfangen hat. Somit ist es beispielsweise möglich, der aktuellen Nachricht N_A, falls diese nur schon durch Sensordaten SRD bekannte Nachrichteninhalte I aufweist, eine derartige Kenngröße P_S der Priorität hinsichtlich der Sicherheitsüberprüfung S zuzuordnen, dass die Bearbeitung der aktuellen Nachricht N_A aufgeschoben wird. Zum Beispiel wird dadurch eine eingehende Stauwarnung später bearbeitet, wenn das Fahrzeug bereits steht.

Bevorzugt wird die Kenngröße P_S der Priorität der Sicherheitsüberprüfung S der aktuellen Nachricht N_A in Abhängigkeit von einem Unterschied des Nachrichteninhalts I zu weiteren Nachrichteninhalten I_EP der in dem Empfangspuffer abgelegten Nachrichten N_EP ermittelt. Auf diese Weise kann die aktuelle Nachricht N_A mit weiteren unbearbeiteten Nachrichten N_EP mit ähnlichem Nachrichteninhalt I_EP zusammengefasst werden, von denen einzelne Nachrichten im Rahmen der weiteren Nachrichtenbearbeitung bevorzugt werden. Ähnliche Nachrichteninhalte I liegen beispielsweise vor, falls sie im gleichen Kontext stehen. Ein Beispiel ähnlicher Nachrichteninhalte I sind zwei Nachrichteninhalte I, die jeweils eine Temperaturangabe der Umgebung enthalten, wobei sich die Temperaturangaben nur wenig unterscheiden, z.B. um weniger als 1 Kelvin. Insbesondere kann zu diesem Zweck eine Bandbreite wie etwa 1 Kelvin Temperaturunterschied angegeben werden, die festlegt, unter welchen Bedingungen zwei Nachrichteninhalte I ähnlich sind.

In einem optionalen Schritt S6 wird eine Kenngröße P_I einer Priorität hinsichtlich des Nachrichteninhalts I der aktuellen Nachricht N_A abhängig von dem Nachrichteninhalt I ermittelt.

Durch das Ermitteln der Kenngröße P_I der Priorität hinsichtlich des Nachrichteninhalts I wird das Festlegen einer Bearbeitungsfolge von Nachrichteninhalten I, I_EP möglich und eine Bearbeitung des Nachrichteninhalts I der aktuellen Nachricht N_A an bestimmte Voraussetzungen anpassbar. Das Ermitteln der Kenngröße P_I der Priorität hinsichtlich des Nachrichteninhalts I abhängig vom Nachrichteninhalt I umfasst insbesondere eine Vorverarbeitung des Nachrichteninhalts I. Die Vorverarbeitung des Nachrichteninhalts I der aktuellen Nachricht N_A umfasst beispielsweise ein Ermitteln des Senders SD und/oder von Stichworten des Nachrichteninhalts I.

Bevorzugt wird die Kenngröße P_I der Priorität hinsichtlich des Nachrichteninhalts I der aktuellen Nachricht N_A in Abhängigkeit von einem Unterschied des Nachrichteninhalts I zu weiteren Nachrichteninhalten I_EP der in dem Empfangspuffer befindlichen Nachrichten N_EP ermittelt. Auf diese Weise kann die aktuelle Nachricht N_A mit weiteren unbearbeiteten Nachrichten N_EP mit ähnlichem Nachrichteninhalt I_EP zusammengefasst werden, von denen einzelne Nachrichten im Rahmen der weiteren Nachrichtenbearbeitung bevorzugt werden. Ähnliche Nachrichteninhalte I liegen beispielsweise vor, falls sie im gleichen Kontext stehen. Ein Beispiel ähnlicher Nachrichteninhalte I sind zwei Nachrichteninhalte I, die jeweils eine Temperaturangabe der Umgebung enthalten, wobei sich die Temperaturangaben nur um einen geringen Teil unterscheiden, z.B. um weniger als 1 Kelvin. Insbesondere kann zu diesem Zweck eine Bandbreite wie etwa 1 Kelvin Temperaturunterschied angegeben werden, die festlegt, unter welchen Bedingungen zwei Nachrichteninhalte I ähnlich sind.

Die Kenngröße P_I der Priorität hinsichtlich des Nachrichteninhalts I der aktuellen Nachricht N_A wird bevorzugt in Abhängigkeit von dem Authentifizierungselement A der aktuellen Nachricht N_A ermittelt. Da zum Beispiel durch die digitale Signatur SIG der Sender SD identifizierbar ist, ermöglicht dies die Bearbeitung hinsichtlich des Nachrichteninhalts I in Abhängigkeit von dem Sender SD durchzuführen. Das heißt bei einem bestimmten Sender SD kann die Bearbeitung hinsichtlich des Nachrichteninhalts I der aktuellen Nachricht N_A der Bearbeitung hinsichtlich der Nachrichteninhalte I_EP der weiteren in dem Empfangspuffer befindlichen Nachrichten N_EP bevorzugt werden. Insbesondere kann die Kenngröße P_I der Priorität hinsichtlich des Nachrichteninhalts I der aktuellen Nachricht N_A in Abhängigkeit von einem vorgegebenen Sendertyp STYP ermittelt werden. Auf diese Weise können Nachrichten von einem bestimmten Sendertyp STYP, zum Beispiel der mobilen Sendeeinheit MSE oder der örtlich feststehenden Sendeeinheit SE, bevorzugt bearbeitet werden hinsichtlich des Nachrichteninhalts I. Insbesondere wird die aktuelle Nachricht N_A, falls der Sendertyp STYP eine örtlich feststehende Sendeeinheit SE ist, bevorzugt bearbeitet im Vergleich zu den im Empfangspuffer befindlichen Nachrichten N_EP, welche von einer mobilen Sendeeinheit MSE gesendet wurden. Bevorzugt sind in diesem Beispiel die örtlich feststehende Sendeeinheit SE eine Road Side Unit und die mobile Sendeeinheit MSE eine On Board Unit eines Fahrzeugs.

Die Kenngröße P_I der Priorität hinsichtlich des Nachrichteninhalts I der aktuellen Nachricht N_A wird insbesondere in Abhängigkeit von einer Relevanz des Nachrichteninhalts I für das vorgegebene geografische Gebiet GEO ermittelt. Das vorgegebene geografische Gebiet GEO kann beispielsweise der Aufenthaltsort des Empfängers mit nahe liegender Umgebung sein. Somit kann die aktuelle Nachricht N_A hinsichtlich des Nachrichteninhalts I bevorzugt bearbeitet werden gegenüber den im Empfangspuffer EP befindlichen Nachrichten N_EP, die sich auf weiter entfernte Orte beziehen. Auch kann zum Beispiel die Fahrtrichtung und Fahrgeschwindigkeit des Empfängers so ausgewertet werden, dass ein Gebiet ermittelt wird, das in naher Zukunft befahren wird, und Nachrichten N, die sich auf dieses Gebiet beziehen, können bevorzugt hinsichtlich des Nachrichteninhalts I bearbeitet werden. Ferner können für unterschiedliche Arten von Nachrichteninhalten I unterschiedliche geografische Gebiete GEO vorgegeben werden, zum Beispiel für Verkehrsflussinformationen ein größeres geografisches Gebiet GEO als für sicherheitsrelevante Informationen.

Bevorzugt wird die Kenngröße P_I der Priorität hinsichtlich des Nachrichteninhalts I der aktuellen Nachricht N_A in Abhängigkeit von vorhandenen Informationen IGEO über das vorgegebene geografische Gebiet GEO ermittelt. Insbesondere sind die Informationen IGEO unabhängig von der aktuellen Nachricht N_A vorhanden. Der Vorteil ist, dass somit die aktuelle Nachricht N_A hinsichtlich des Nachrichteninhalts I bevorzugt bearbeitet werden kann, falls diese sich auf ein geografisches Gebiet GEO bezieht, über welches noch keine oder noch zu wenige Informationen IGEO vorliegen. Dies kann unabhängig von der sonstigen Art des Nachrichteninhalts I der aktuellen Nachricht N_A erfolgen.

Des Weiteren kann die Kenngröße P_I der Priorität hinsichtlich des Nachrichteninhalts I der aktuellen Nachricht N_A in Abhängigkeit der Sensordaten SRD des Sensors SR ermittelt werden, welcher der Nachrichtenbearbeitungsvorrichtung V zugeordnet ist. Der Sensor SR ist zum Beispiel ein Sensor, der die Geschwindigkeit oder eine Umgebungstemperatur des Fahrzeugs ermittelt, welches die aktuelle Nachricht N_A empfangen hat. Somit ist es beispielsweise möglich, der aktuellen Nachricht N_A, falls diese nur schon durch Sensordaten SRD bekannte Nachrichteninhalte I aufweist, eine derartige Kenngröße P_I der Priorität hinsichtlich des Nachrichteninhalts I zuzuordnen, dass die Bearbeitung des aktuellen Nachricht N_A hinsichtlich des Nachrichteninhalts I aufgeschoben wird. Zum Beispiel wird dadurch eine eingehende Stauwarnung später bearbeitet, wenn das Fahrzeug bereits steht oder sich nur mit geringer Geschwindigkeit, z.B. weniger als 10 km/h, bewegt.

Durch das Ermitteln der Kenngröße P_S der Priorität hinsichtlich der Sicherheitsüberprüfung der aktuellen Nachricht N_A und optional der Kenngröße P_I der Priorität hinsichtlich des Nachrichteninhalts I wird in einem Schritt S7 die aktuelle Nachricht N_A mit ihrem Nachrichteninhalt I und dem Authentifizierungselement A in ein Element des Tupels der Nachrichten N_EP im Empfangspuffer mit zumindest einer ermittelten Kenngrößen der Priorität umbenannt. Jedem Element des Tupels der Nachrichten N_EP im Empfangspuffer, welche jeweils den Nachrichteninhalt I_EP und das Authentifizierungselement A_EP umfassen, ist somit die jeweilige ermittelte Kenngröße P_S der Priorität hinsichtlich der Sicherheitsüberprüfung S und optional die jeweilige ermittelte Kenngröße P_I der Priorität hinsichtlich des Nachrichteninhalts I zugeordnet.

Ferner können weitere Schritte vorgesehen sein für das Empfangen der Nachrichten N und Ermitteln von Kenngrößen von Prioritäten.

Neben dem Empfangen der Nachrichten N und Ermitteln von Kenngrößen von Prioritäten als Grundlage zum Festlegen einer Bearbeitungsfolge für eine weitere Nachrichtenbearbeitung der Nachrichten N sind auch andere dem Fachmann bekannte Programmabläufe zum Empfangen von Nachrichten und Ermitteln von Kenngrößen von Prioritäten denkbar.

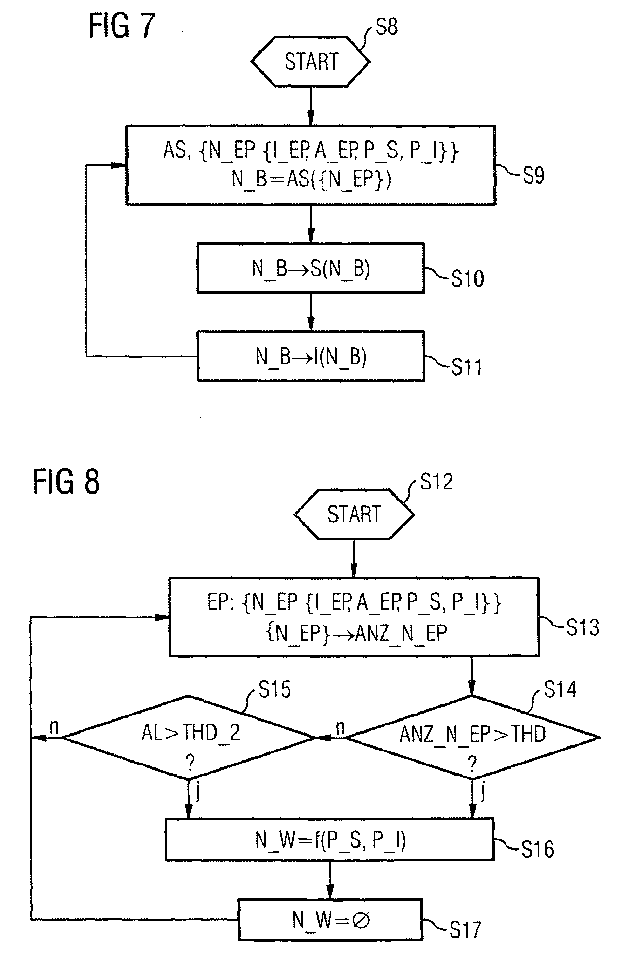

Figur 7 zeigt ein Ablaufdiagramm eines Programms zum Bearbeiten von empfangenen Nachrichten N mittels der Kenngrößen von Prioritäten. Das Programm beginnt in einem Schritt S8. In einem Schritt S9 ermittelt eine Ablaufsteuerung AS in Abhängigkeit von den Elementen des Tupels der Nachrichten N_EP im Empfangspuffer eine zu bearbeitende Nachricht N B. Dabei umfasst jedes Element des Tupels der Nachrichten N_EP im Empfangspuffer jeweils den Nachrichteninhalt I_EP, das Authentifizierungselement A_EP, die jeweils ermittelte Kenngröße P_S der Priorität hinsichtlich der Sicherheitsüberprüfung S und/oder die jeweils ermittelte Kenngröße P_I der Priorität hinsichtlich des Nachrichteninhalts I. Insbesondere wird durch die Ablaufsteuerung AS aus den Nachrichten N_EP in Abhängigkeit der Kenngrößen P_S der Priorität hinsichtlich der Sicherheitsüberprüfungen S und/oder der Kenngrößen P_I der Priorität hinsichtlich der Nachrichteninhalte I die zu bearbeitende Nachricht N_B ermittelt. Bevorzugt wird durch die Ablaufsteuerung AS aus den Nachrichten N_EP mit höchster Priorität beginnend die zu bearbeitende Nachricht N_B ermittelt. Insbesondere wird aus den Nachrichten N_EP die zu bearbeitende Nachricht N_B mit höchster Kenngröße P_S der Priorität hinsichtlich der Sicherheitsüberprüfung S beginnend ermittelt. Möglich ist auch, aus den Nachrichten N_EP die zu bearbeitende Nachricht N_B mit höchster Kenngröße P_I der Priorität hinsichtlich des Nachrichteninhalts I beginnend zu ermitteln. Eine weitere Möglichkeit bietet mittels einer Verknüpfung, beispielsweise einer Addition, der jeweiligen Kenngrößen P_S der Priorität hinsichtlich der Sicherheitsüberprüfungen S mit den jeweiligen Kenngrößen P_I der Priorität hinsichtlich der Nachrichteninhalte I die zu bearbeitende Nachricht N_B mit höchstem Wert beginnend zu ermitteln, beispielsweise mit höchster Summe. Des Weiteren werden bevorzugt die jeweiligen Kenngrößen P_S der Priorität hinsichtlich der Sicherheitsüberprüfungen S und die jeweiligen Kenngrößen P_I der Priorität hinsichtlich der Nachrichteninhalte I gleichwertig behandelt, um die zu bearbeitende Nachricht N_B zu ermitteln.

In einem Schritt S10 wird die Nachrichtenbearbeitung der zu bearbeitenden Nachricht N_B hinsichtlich der Sicherheitsüberprüfung S durchgeführt. Die Sicherheitsüberprüfung S der zu bearbeitenden Nachricht N_B wird anhand des Authentifizierungselements A_EP durchgeführt. Bevorzugt wird in der Sicherheitsüberprüfung S der zu bearbeitenden Nachricht N_B die digitale Signatur SIG mit Hilfe des öffentlichen Schlüssels verifiziert, der mit der digitalen Signatur SIG mitgeliefert werden kann. Für jede verschlüsselte Übermittlung benötigt der Sender SD somit den öffentlichen Schlüssel des Empfängers. Anhand des digitalen Zertifikats CERT kann die Authentizität des öffentlichen Schlüssels und der zulässige Anwendungs- und Geltungsbereich bestätigt werden. Das digitale Zertifikat CERT ist selbst durch eine digitale Signatur geschützt, deren Echtheit mit dem öffentlichen Schlüssel des Ausstellers des Zertifikates geprüft werden kann. Um die Authentizität des Aussteller-Schlüssels zu prüfen, wird wiederum ein digitales Zertifikat benötigt. Auf diese Weise lässt sich eine Kette von digitalen Zertifikaten aufbauen, die Zertifikatskette, die jeweils die Authentizität des öffentlichen Schlüssels bestätigt, mit dem das vorhergehende Zertifikat geprüft werden kann. Auf die Echtheit des letzten Zertifikates müssen sich die Kommunikationspartner aber ohne ein weiteres Zertifikat verlassen können. Somit ist eine oberste Zertifizierungsstelle vorausgesetzt, der alle teilnehmenden Parteien vertrauen. Ist die Prüfung der digitalen Signatur SIG erfolgreich, dann wurde der Nachrichteninhalt nicht verändert (Authentifizierung) und die Sicherheitsüberprüfung S der zu bearbeitenden Nachricht N_B ist somit abgeschlossen.

Die Sicherheitsüberprüfung S der zu bearbeitenden Nachricht N_B kann beispielsweise in der Nachrichtenbearbeitungsvorrichtung V in der ersten Recheneinheit RE oder in dem Sicherheitsmodul SMOD mit der weiteren Recheneinheit durchgeführt werden abhängig von dem Wert der Kenngröße P_S der Priorität hinsichtlich der Sicherheitsüberprüfung S der zu bearbeitenden Nachricht N_B.

Auch andere dem Fachmann bekannte Sicherheitsüberprüfungen S der zu bearbeitenden Nachricht N_B anhand des Authentifizierungselements A_EP sind denkbar.

Des Weiteren kann die Sicherheitsüberprüfung S der zu bearbeitenden Nachricht N_B in Abhängigkeit von dem Authentifizierungselement A_EP der zu bearbeitenden Nachricht N_B nur in reduzierter Form durchgeführt werden. Auf diese Weise können Sicherheitsüberprüfungen S beispielsweise bei bekannten digitalen Zertifikaten CERT vereinfacht durchgeführt werden. Bekannte Zertifikatsketten werden zum Beispiel nicht komplett geprüft.

Insbesondere kann die Sicherheitsüberprüfung S der zu bearbeitenden Nachricht N_B auch eingespart werden, beispielsweise bei bekannten, bereits geprüften Sendern SD.

In einem Schritt S11 wird die Nachrichtenbearbeitung hinsichtlich des Nachrichteninhalts I_EP der zu bearbeitenden Nachricht N_B durchgeführt. Bevorzugt werden die Nutzdaten ND des Nachrichteninhalts I_EP ausgewertet. Dies umfasst beispielsweise das Erkennen und Anzeigen einer drohenden Gefahrensituation GS wie etwa der Kollision mit Fahrzeugen oder ein Stauende hinter einer Kurve oder Glätte.

Auch kann die Nachrichtenbearbeitung der zu bearbeitenden Nachricht N_B hinsichtlich des Nachrichteninhalts I_EP parallel zu der Sicherheitsüberprüfung S der zu bearbeitenden Nachricht N_B ablaufen. Auf diese Weise werden die schnelle Nachrichtenbearbeitung und gleichzeitig die akkurate Erfassung der Umgebung möglich.

Insbesondere kann die Nachrichtenbearbeitung hinsichtlich des Nachrichteninhalts I_EP der zu bearbeitenden Nachricht N_B auch eingespart werden, beispielsweise bei bereits bekannten Nachrichteninhalten I_EP.

Figur 8 zeigt ein Ablaufdiagramm eines Programms zum Verwerfen von empfangenen Nachrichten N anhand der Kenngrößen von Prioritäten. In einem Schritt S12 beginnt das Programm. In einem Schritt S13 wird aus dem Tupel der im Empfangspuffer befindlichen Nachrichten N_EP eine Anzahl ANZ_N_EP der Nachrichten N_EP im Empfangspuffer ermittelt. Dabei umfasst jedes Element des Tupels der Nachrichten N_EP im Empfangspuffer jeweils den Nachrichteninhalt I_EP, das Authentifizierungselement A_EP, die jeweils ermittelte Kenngröße P_S der Priorität hinsichtlich der Sicherheitsüberprüfung S und/oder die jeweils ermittelte Kenngröße P_I der Priorität hinsichtlich des Nachrichteninhalts I.

In einem Schritt S14 wird überprüft, ob die Anzahl ANZ_N_EP der Nachrichten N_EP im Empfangspuffer einen ersten vorgegebenen Schwellenwert THD übersteigt. Der Schwellenwert THD ist beispielsweise so gewählt, dass 90% der Speicherkapazität des Empfangspuffers EP durch die in diesem befindlichen Nachrichten N_EP belegt sind. Ist der erste Schwellenwert THD nicht überschritten, so fährt das Programm mit einem Schritt S15 fort. In dem Schritt S15 wird überprüft, ob die Auslastung (AL) der ersten Recheneinheit (RE) der Nachrichtenbearbeitungsvorrichtung (V) einen zweiten vorgegebenen Schwellenwert (THD_2) übersteigt. Der zweite Schwellenwert (THD_2) ist beispielsweise so gewählt, dass 90% der ersten Recheneinheit (RE) der Nachrichtenbearbeitungsvorrichtung (V) ausgelastet sind. Ist der zweite Schwellenwert THD_2 nicht überschritten, so fährt das Programm mit dem Schritt S13 fort.
Übersteigt die Anzahl ANZ_N_EP der Nachrichten N_EP im Empfangspuffer den ersten Schwellenwert THD oder übersteigst die Auslastung (AL) der ersten Recheneinheit (RE) den zweiten Schwellenwert THD_2, so wird in einem Schritt S16 eine zu verwerfende Nachricht N_W ermittelt. Bevorzugt wird die zu verwerfende Nachricht N_W in Abhängigkeit von der jeweiligen Kenngrößen P_S der Priorität hinsichtlich der Sicherheitsüberprüfung S der Nachrichten N_EP und/oder der jeweiligen Kenngrößen P_I der Priorität hinsichtlich der Nachrichteninhalte I_EP der Nachrichten N_EP ermittelt.
Insbesondere wird aus den Nachrichten N_EP die zu verwerfende Nachricht N_W mit niedrigster Priorität beginnend ermittelt. Bevorzugt wird aus den Nachrichten N_EP die zu verwerfende Nachricht N_W mit niedrigster Kenngröße P_S der Priorität hinsichtlich der Sicherheitsüberprüfung S beginnend ermittelt. Möglich ist auch, aus den Nachrichten N_EP die zu verwerfende Nachricht N_W mit niedrigster Kenngröße P_I der Priorität hinsichtlich des Nachrichteninhalts I beginnend zu ermitteln. Eine weitere Möglichkeit bietet mittels einer Verknüpfung, beispielsweise einer Addition, der jeweiligen Kenngrößen P_S der Priorität hinsichtlich der Sicherheitsüberprüfungen S mit den jeweiligen Kenngrößen P_I der Priorität hinsichtlich der Nachrichteninhalte I die zu verwerfende Nachricht N_W mit niedrigstem Wert beginnend zu ermitteln, beispielsweise mit niedrigster Summe. Des Weiteren werden bevorzugt die jeweiligen Kenngrößen P_S der Priorität hinsichtlich der Sicherheitsüberprüfungen S und die jeweiligen Kenngrößen P_I der Priorität hinsichtlich der Nachrichteninhalte I gleichwertig behandelt, um die zu verwerfende Nachricht N_W zu ermitteln. Die zu verwerfende Nachricht N_W wird in einem Schritt S17 verworfen.

## Patentansprüche

1. Verfahren zum Bearbeiten von Nachrichten (N) in einer Nachrichtenbearbeitungsvorrichtung (V), die zumindest einen Empfangspuffer (EP) aufweist, wobei eine jeweilige Nachricht (N) zumindest ein Authentifizierungselement (A) und einen Nachrichteninhalt (I) umfasst, bei dem
- die jeweilige Nachricht (N) empfangen wird,
- die jeweilige Nachricht (N) in dem Empfangspuffer (EP) abgelegt wird,
- eine Kenngröße (P_S) einer Priorität hinsichtlich einer Sicherheitsüberprüfung (S) der jeweiligen Nachricht (N) abhängig von dem Nachrichteninhalt (I) ermittelt wird, und
- eine Bearbeitungsfolge für eine weitere Nachrichtenbearbeitung hinsichtlich der Sicherheitsüberprüfung (S) unter Berücksichtigung des jeweiligen zumindest einen Authentifizierungselements (A) der in dem Empfangspuffer (EP) befindlichen Nachrichten (N, N_EP) abhängig von den Werten der Kenngröße (P_S) der Priorität hinsichtlich der Sicherheitsüberprüfung (S) der Nachrichten (N, N_EP) festgelegt und durchgeführt wird,
**dadurch gekennzeichnet,**
**dass** die Kenngröße (P_S) der Priorität hinsichtlich der Sicherheitsüberprüfung (S) der jeweiligen Nachricht (N) in Abhängigkeit von mindestens einem Authentifizierungselement (A) der jeweiligen Nachricht (N) und in Abhängigkeit eines Ermittelns einer drohenden Gefahrensituation (GS) ermittelt wird, die abhängig vom Nachrichteninhalt (I) der jeweiligen Nachricht (N) oder weiteren Nachrichteninhalten (I_EP) anderer Nachrichten (N_EP) identifiziert wird.

2. Verfahren nach einem der vorstehenden Ansprüche, bei dem der Wert der Kenngröße (P_S) der Priorität hinsichtlich der Sicherheitsüberprüfung (s) einzelner Nachrichten (N) stichprobenartig so verändert wird, dass eine Bearbeitung der jeweiligen Nachricht (N) hinsichtlich der Sicherheitsüberprüfung (S) der jeweiligen Nachricht (N) der Bearbeitung der weiteren in dem Empfangspuffer (EP) befindlichen Nachrichten (N_EP) vorgezogen wird.

3. Verfahren nach einem der vorstehenden Ansprüche, bei dem die Kenngröße (P_S) der Priorität hinsichtlich der Sicherheitsüberprüfung (S) der jeweiligen Nachricht (N) in Abhängigkeit von einem Typ des Nachrichteninhalts (I) ermittelt wird.

4. Verfahren nach einem der vorstehenden Ansprüche, bei dem die Kenngröße (P_S) der Priorität hinsichtlich der Sicherheitsüberprüfung (S) der jeweiligen Nachricht (N) in Abhängigkeit von einer Relevanz des Nachrichteninhalts für ein vorgegebenes geographisches Gebiet (GEO) ermittelt wird.

5. Verfahren nach Anspruch 4, bei dem die Kenngröße (P_S) der Priorität hinsichtlich der Sicherheitsüberprüfung (S) der jeweiligen Nachricht (N) in Abhängigkeit von vorhandenen Informationen (IGEO) über das vorgegebene geographische Gebiet (GEO) ermittelt wird.

6. Verfahren nach einem der vorstehenden Ansprüche, bei dem die Kenngröße (P_S) der Priorität hinsichtlich der Sicherheitsüberprüfung (S) der jeweiligen Nachricht (N) in Abhängigkeit von Sensordaten (SRD) von zumindest einem Sensor (SR) ermittelt wird, der der Nachrichtenbearbeitungsvorrichtung (V) zugeordnet ist.

7. Verfahren nach einem der vorstehenden Ansprüche, bei dem die Kenngröße (P_S) der Priorität der Sicherheitsüberprüfung (S) der jeweiligen Nachricht (N) in Abhängigkeit von einem Unterschied des Nachrichteninhaltes (I) zu weiteren Nachrichteninhalten (I_EP) der in dem Empfangspuffer (EP) abgelegten Nachrichten (N_EP) ermittelt wird.

8. Verfahren nach einem der vorstehenden Ansprüche, bei dem die Kenngröße (P_S) der Priorität hinsichtlich der Sicherheitsüberprüfung (S) der jeweiligen Nachricht (N) in Abhängigkeit von einem vorgegebenen Sendertyp (STYP) ermittelt wird.

9. Verfahren nach Anspruch 8, bei dem der Wert der Kenngröße (P_S) der Priorität hinsichtlich der Sicherheitsüberprüfung (S) einzelner Nachrichten (N, N_EP) so verändert wird, dass eine Bearbeitung der jeweiligen Nachricht (N) hinsichtlich der Sicherheitsüberprüfung (S) der jeweiligen Nachricht (N), falls der Sendertyp (STYP) der Nachricht (N) eine örtlich feststehende Sendeeinheit (SE) ist, der Bearbeitung der weiteren in dem Empfangspuffer (EP) befindlichen Nachrichten (N_EP) vorgezogen wird, falls der Sendertyp (STYP) der Nachrichten (N_EP) eine mobile Sendeeinheit (MSE) ist.

10. Verfahren nach einem der vorstehenden Ansprüche, bei dem in Abhängigkeit der Speicherkapazität des Empfangspuffers (EP) die in dem Empfangspuffer (EP) befindlichen Nachrichten (N, N_EP) abhängig von den Werten der Kenngröße (P_S) der Priorität hinsichtlich der Sicherheitsüberprüfung (S) der Nachrichten (N, N_EP) verworfen werden.

11. Verfahren nach einem der vorstehenden Ansprüche, bei dem in Abhängigkeit von der Auslastung (AL) einer ersten Recheneinheit (RE) der Nachrichtenbearbeitungsvorrichtung (V) die in dem Empfangspuffer (EP) befindlichen Nachrichten (N, N_EP) abhängig von den Werten der Kenngröße (P_S) der Priorität hinsichtlich der Sicherheitsüberprüfung (S) der Nachrichten (N, N_EP) verworfen werden.

12. verfahren nach einem der vorstehenden Ansprüche, bei dem die Nachrichtenbearbeitung hinsichtlich der Sicherheitsüberprüfung (S) in Abhängigkeit von dem zumindest einen Authentifizierungselement (A) der jeweiligen Nachricht (N) nur in reduzierter Form durchgeführt wird.

13. Verfahren nach einem der vorstehenden Ansprüche, bei dem die Nachrichtenbearbeitungsvorrichtung (V) zum Bearbeiten der jeweiligen Nachricht (N) die erste Recheneinheit (RE) und ein Sicherheitsmodul (SMOD) mit einer weiteren Recheneinheit umfasst und ausgebildet ist, abhängig von den Werten der Kenngröße (P_S) der Priorität hinsichtlich der Sicherheitsüberprüfung (S) der jeweiligen Nachricht (N) die Nachrichtenbearbeitung der jeweiligen Nachricht (N) hinsichtlich der Sicherheitsüberprüfung (S) in der ersten Recheneinheit (RE) oder in dem Sicherheitsmodul (SMOD) durchzuführen.

14. Verfahren nach einem der vorstehenden Ansprüche, bei dem
- eine Kenngröße (P_I) einer Priorität hinsichtlich des Nachrichteninhalts (I) der jeweiligen Nachricht (N) abhängig von dem Nachrichteninhalt (I) ermittelt wird, und
- die Bearbeitungsfolge für die weitere Nachrichtenbearbeitung der in dem Empfangspuffer (EP) befindlichen Nachrichten (N, N_EP) abhängig von den Werten der Kenngröße (P_S) der Priorität hinsichtlich der Sicherheitsüberprüfung (S) und der Kenngröße (P_I) der Priorität hinsichtlich des Nachrichteninhalts (I) der Nachrichten (N, N_EP) festgelegt und durchgeführt wird.

15. Verfahren nach Anspruch 14, bei dem die Kenngröße (P_I) der Priorität hinsichtlich des Nachrichteninhalts (I) der jeweiligen Nachricht (N) in Abhängigkeit von dem Unterschied des Nachrichteninhaltes (I) zu den weiteren Nachrichteninhalten (I_EP) der im Empfangspuffer (EP) abgelegten Nachrichten (N_EP) ermittelt wird.

16. Verfahren nach Anspruch 14 oder 15, bei dem die Kenngröße (P_I) der Priorität hinsichtlich des Nachrichteninhalts (I) der jeweiligen Nachricht (N) in Abhängigkeit von dem vorgegebenen Sendertyp (STYP) ermittelt wird.

17. Verfahren nach Anspruch 14 - 16, bei dem in Abhängigkeit der Speicherkapazität des Empfangspuffers (EP) die in dem Empfangspuffer (EP) befindlichen Nachrichten (N, N_EP) abhängig von den Werten der Kenngröße (P_I) der Priorität hinsichtlich des Nachrichteninhalts (I, I_EP) der Nachrichten (N, N_EP) verworfen werden.

18. Verfahren nach Anspruch 14 - 17, bei dem in Abhängigkeit von der Auslastung (AL) der ersten Recheneinheit (RE) der Nachrichtenbearbeitungsvorrichtung (V) die in dem Empfangspuffer (EP) befindlichen Nachrichten (N, N_EP) abhängig von den Werten der Kenngröße (P_I) der Priorität hinsichtlich des Nachrichteninhalts (I, I_EP) der Nachrichten (N, N_EP) verworfen werden.

19. Nachrichtenbearbeitungsvorrichtung (V) zum Bearbeiten von Nachrichten (N) nach dem Verfahren gemäß Anspruch 1 bis 19, wobei eine jeweilige Nachricht (N) zumindest ein Authentifizierungselement (A) und einen Nachrichteninhalt (I) umfasst, wobei die Nachrichtenbearbeitungsvorrichtung (V) zumindest einen Empfangspuffer (EP) aufweist und ausgebildet ist
- zum Empfangen der jeweiligen Nachricht (N),
- zum Ablegen der jeweiligen Nachricht (N) in zumindest einem Empfangspuffer (EP),
- zum Ermitteln einer Kenngröße (P_S) einer Priorität hinsichtlich einer Sicherheitsüberprüfung (S) der jeweiligen Nachricht (N) abhängig von dem Nachrichteninhalt (I), und
- zum Festlegen und Durchführen einer Bearbeitungsfolge für eine weitere Nachrichtenbearbeitung hinsichtlich der Sicherheitsüberprüfung (S) unter Berücksichtigung des jeweiligen zumindest einen Authentifizierungselements (A) der in dem Empfangspuffer (EP) befindlichen Nachrichten (N, N_EP) abhängig von den Werten der Kenngröße (P_S) der Priorität hinsichtlich der Sicherheitsüberprüfung (S) der Nachrichten (N, N-EP)
**dadurch gekennzeichnet,**
**dass** die Nachrichtenbearbeitungsvorrichtung zumindest eine erste Recheneinheit (RE) und zumindest ein Sicherheitsmodul (SMOD) mit zumindest einer weiteren Recheneinheit umfasst und ausgebildet ist zum Durchführen der Nachrichtenbearbeitung hinsichtlich der Sicherheitsüberprüfung (S) der jeweiligen Nachricht (N) in der ersten Recheneinheit (RE) oder in dem Sicherheitsmodul (SMOD) abhängig von den Werten der Kenngröße (P_S) der Priorität hinsichtlich der Sicherheitsüberprüfung (S) der jeweiligen Nachricht (N), wobei
die Kenngröße (P_S) der Priorität hinsichtlich der Sicherheitsüberprüfung (S) der jeweiligen Nachricht (N) in Abhängigkeit von mindestens einem Authentifizierungselement (A) der jeweiligen Nachricht (N) und in Abhängigkeit eines, Ermittelns einer drohenden Gefahrensituation (GS) ermittelt wird, die abhängig vom Nachrichteninhalt (I) der jeweiligen Nachricht (N) oder weiteren Nachrichteninhalten (I_EP) anderer Nachrichten (N_EP) identifiziert wird.

## Claims

1. Method for processing messages (N) in a message processing device (V) which has at least one reception buffer (EP), wherein a respective message (N) comprises at least one authentication element (A) and one message content (I), in which method
- the respective message (N) is received,
- the respective message (N) is stored in the reception buffer (EP),
- a characteristic variable (P_S) of a priority for security checking (S) of the respective message (N) is determined as a function of the message content (I), and
- a processing sequence for further message processing for the security checking (S) taking into account the respective at least one authentication element (A) of the messages (N, N_EP) in the reception buffer (EP) is defined and carried out as a function of the values of the characteristic variable (P_S) of the priority for the security checking (S) of the messages (N, N_EP), **characterized in that** the characteristic variable (P_S) of the priority for the security checking (S) of the respective message (N) is determined as a function of at least one authentication element (A) of the respective message (N) and as a function of the determination of an imminent hazardous situation (GS) which is identified as a function of the message content (I) of the respective message (N) or further message contents (I_EP) of other messages (N_EP).

2. Method according to Claim 1, in which the value of the characteristic variable (P_S) of the priority for the security checking (S) of individual messages (N) is changed in the manner of a sample in such a way that processing of the respective message (N) for the security checking (S) of the respective message (N) is preferred over processing of the further messages (N_EP) in the reception buffer (CP).

3. Method according to one of the preceding claims, in which the characteristic variable (P_S) of the priority for the security checking (S) of the respective message (N) is determined as a function of a type of the message content (I).

4. Method according to one of the preceding claims, in which the characteristic variable (P_S) of the priority for the security checking (S) of the respective message (N) is determined as a function of a relevance of the message content for a predefined geographic region (GEO).

5. Method according to Claim 4, in which the characteristic variable (P_S) of the priority for the security checking (S) of the respective message (N) is determined as a function of available information (IGEO) about the predefined geographic region (GEO).

6. Method according to one of the preceding claims, in which the characteristic variable (P_S) of the priority for the security checking (S) of the respective message (N) is determined as a function of sensor data (SRD) of at least one sensor (SR) which is assigned to the message processing device (V) .

7. Method according to one of the preceding claims, in which the characteristic variable (P_S) of the priority for the security checking (S) of the respective message (N) is determined as a function of a difference between the message content (I) and further message contents (I_EP) of the messages (N_EP) which are stored in the reception buffer (EP).

8. Method according to one of the preceding claims, in which the characteristic variable (P_S) of the priority for the security checking (S) of the respective message (N) is determined as a function of a predefined transmitter type (STYP).

9. Method according to Claim 8, in which the value of the characteristic variable (P_S) of the priority for the security checking (S) of individual messages (N, N_EP) is changed in such a way that, if the transmitter type (STYP) of the message (N) is a locationally fixed transmitting unit (SE), processing of the respective message (N) for the security checking (S) of the respective message (N) is preferred over processing of the further messages (N_EP) in the reception buffer (EP) if the transmitter type (STYP) of the messages (N_EP) is a mobile transmitting unit (MSE).

10. Method according to one of the preceding claims, in which, depending on the storage capacity of the reception buffer (EP), the messages (N, N_EP) in the reception buffer (EP) are rejected as a function of the values of the characteristic variable (P_S) of the priority for the security checking (S) of the messages (N, N_EP).

11. Method according to one of the preceding claims, in which, depending on the capacity utilization (AL) of a first computing unit (RE) of the message processing device (V), the messages (N, N_EP) in the reception buffer (EP) are rejected as a function of the values of the characteristic variable (P_S) of the priority for the security checking (S) of the messages (N, N_EP).

12. Method according to one of the preceding claims, in which the message processing for the security checking (S) as a function of the at least one authentication element (A) of the respective message (N) is carried out only in a reduced form.

13. Method according to one of the preceding claims, in which the message processing device (V) for processing the respective message (N) comprises the first computing unit (RE) and a security module (SMOD) with a further computing unit, and is designed to carry out the message processing of the respective message (N) for the security checking (S) in the first computing unit (RE) or in the security module (SMOD) as a function of the values of the characteristic variable (P_S) of the priority for the security checking (S) of the respective message (N).

14. Method according to one of the preceding claims, in which
- a characteristic variable (P_I) of a priority for the message content (I) of the respective message (N) is determined as a function of the message content (I), and
- the processing sequence for the further message processing of the messages (N, N_EP) in the reception buffer (EP) is defined and carried out as a function of the values of the characteristic variable (P_S) of the priority for the security checking (S) and of the characteristic variable (P_I) of the priority for the message content (I) of the messages (N, N_EP).

15. Method according to Claim 14, in which the characteristic variable (P_I) of the priority for the message content (I) of the respective message (N) is determined as a function of the difference between the message content (I) and the further message contents (I_EP) of the messages (N_EP) which are stored in the reception buffer (EP).

16. Method according to Claims 14 or 15, in which the characteristic variable (P_I) of the priority for the message content (I) of the respective message (N) is determined as a function of the predefined transmitter type (STYP).

17. Method according to Claims 14 - 16, in which, depending on the storage capacity of the reception buffer (EP), the messages (N, N_EP) in the reception buffer (EP) are rejected as a function of the values of the characteristic variable (P_I) of the priority for the message content (I, I_EP) of the messages (N, N_EP).

18. Method according to Claims 14 - 17, in which, depending on the capacity utilization (AL) of the first computing unit (RE) of the message processing device (V), the messages (N, N_EP) in the reception buffer (EP) are rejected as a function of the values of the characteristic variable (P_I) of the priority for the message content (I, I_EP) of the messages (N, N_EP).

19. Message processing device (V) for processing messages (N) according to the method in accordance with Claim 1 to 18, wherein a respective message (N) comprises at least one authentication element (A) and one message content (I), wherein the message processing device (V) has at least one reception buffer (EP) and is designed
- to receive the respective message (N),
- to store the respective message (N) in at least one reception buffer (EP),
- to determine a characteristic variable (P_S) of a priority for security checking (S) of the respective message (N) as a function of the message content (I), and
- to define and carry out a processing sequence for further message processing for the security checking (S) taking into account the respective at least one authentication element (A) of the messages (N, N_EP) in the reception buffer (EP) as a function of the values of the characteristic variable (P_S) of the priority for the security checking (S) of the messages (N, N_EP), **characterized in that** the message processing device comprises at least one first computing unit (RE) and at least one security module (SMOD) with at least one further computing unit, and is designed
to carry out message processing for the security checking (S) of the respective message (N) in the first computing unit (RE) or in the security module (SMOD) as a function of the values of the characteristic variable (P_S) of the priority for the security checking (S) of the respective message (N), wherein the characteristic variable (P_S) of the priority for the security checking (S) of the respective message (N) is determined as a function of at least one authentication element (A) of the respective message (N) and as a function of the determination of an imminent hazardous situation (GS) which is identified as a function of the message content (I) of the respective message (N) or further message contents (I_EP) of other messages (N_EP).

## Revendications

1. Procédé permettant de traiter des informations (N) dans un système (V) de traitement d'informations qui comporte au moins un tampon de réception (EP), chaque information (N) comprenant au moins un élément d'authentification (A) et un contenu (I) d'information, procédé au cours duquel
- l'information correspondante (N) est reçue,
- l'information correspondante (N) est stockée dans le tampon de réception (EP),
- une grandeur caractéristique (P_S) d'une priorité en ce qui concerne un contrôle de sécurité (S) de l'information correspondante (N) est déterminée en fonction du contenu (I) de l'information et
- une séquence de traitement est définie et exécutée pour un autre traitement de l'information en ce qui concerne le contrôle de sécurité (S) en tenant compte du au moins un élément correspondant d'authentification (A) des informations (N, N_EP) qui se trouvent dans le tampon de réception (EP), en fonction des valeurs de la grandeur caractéristique (P_S) de la priorité en ce qui concerne le contrôle de sécurité (S) des informations (N, N_EP),
**caractérisé par le fait**
**que** la grandeur caractéristique (P_S) de la priorité en ce qui concerne le contrôle de sécurité (S) de l'information correspondante (N) est déterminée en fonction de au moins un élément d'authentification (A) de l'information correspondante (N) et en fonction de la détermination d'une situation de danger (GS) menaçante, laquelle est identifiée en fonction du contenu (I) de l'information (N) correspondante ou du contenu (I_EP) d'autres informations (N_EP).

2. Procédé selon l'une des revendications précédentes, au cours duquel la valeur de la grandeur caractéristique (P_S) de la priorité en ce qui concerne le contrôle de sécurité (S) d'informations (N) individuelles est modifiée par échantillon de manière telle qu'un traitement de l'information correspondante (N) en ce qui concerne le contrôle de sécurité (S) de l'information correspondante (N) est effectué avant le traitement des autres informations (N_EP) qui se trouvent dans le tampon de réception (EP).

3. Procédé selon l'une des revendications précédentes, au cours duquel la grandeur caractéristique (P_S) de la priorité en ce qui concerne le contrôle de sécurité (S) de l'information correspondante (N) est déterminée en fonction d'un type de contenu d'information (I).

4. Procédé selon l'une des revendications précédentes, au cours duquel la grandeur caractéristique (P_S) de la priorité en ce qui concerne le contrôle de sécurité (S) de l'information correspondante (N) est déterminée en fonction de la pertinence du contenu de l'information pour une région géographique donnée (GEO).

5. Procédé selon la revendication 4, au cours duquel la grandeur caractéristique (P_S) de la priorité en ce qui concerne le contrôle de sécurité (S) de l'information correspondante (N) est déterminée en fonction d'informations (IGEO) disponibles concernant la région géographique donnée (GEO) .

6. Procédé selon l'une des revendications précédentes, au cours duquel la grandeur caractéristique (P_S) de la priorité en ce qui concerne le contrôle de sécurité (S) de l'information correspondante (N) est déterminée en fonction de données (SRD) provenant de au moins un détecteur (SR) qui est affecté au système (V) de traitement d'informations.

7. Procédé selon l'une des revendications précédentes, au cours duquel la grandeur caractéristique (P_S) de la priorité en ce qui concerne le contrôle de sécurité (S) de l'information correspondante (N) est déterminée en fonction d'une différence entre le contenu (I) de l'information et le contenu (I_EP) d'autres informations (N_EP) stockées dans le tampon (EP) de réception.

8. Procédé selon l'une des revendications précédentes, au cours duquel la grandeur caractéristique (P_S) de la priorité en ce qui concerne le contrôle de sécurité (S) de l'information correspondante (N) est déterminée en fonction d'un type (STYP) donné d'émetteur.

9. Procédé selon la revendication 8, au cours duquel la valeur de la grandeur caractéristique (P_S) de la priorité en ce qui concerne le contrôle de sécurité (S) d'informations (N, N_EP) individuelles est modifiée de manière telle que, dans le cas où le type d'émetteur (STYP) de l'information (N) est une unité émettrice (SE) localement fixe, un traitement de l'information correspondante (N) en ce qui concerne le contrôle de sécurité (S) de l'information correspondante (N) est effectué avant le traitement des autres informations (N_EP) qui se trouvent dans le tampon de réception (EP), dans le cas où le type d'émetteur (STYP) des informations (N_EP) est une unité émettrice mobile (MSE).

10. Procédé selon l'une des revendications précédentes, au cours duquel, en fonction de la capacité de la mémoire du tampon de réception (EP), les informations (N, N_EP) qui se trouvent dans le tampon de réception (EP) sont rejetées en fonction des valeurs de la grandeur caractéristique (P_S) de la priorité en ce qui concerne le contrôle de sécurité (S) des informations (N, N_EP).

11. Procédé selon l'une des revendications précédentes, au cours duquel, en fonction de la charge de travail (AL) d'une première unité de calcul (RE) du système (V) de traitement d'informations, les informations (N, N_EP) qui se trouvent dans le tampon de réception (EP) sont rejetées en fonction des valeurs de la grandeur caractéristique (P_S) de la priorité en ce qui concerne le contrôle de sécurité (S) des informations (N, N_EP).

12. Procédé selon l'une des revendications précédentes, au cours duquel le traitement des informations en ce qui concerne le contrôle de sécurité (S) en fonction du au moins un élément d'authentification (A) de l'information correspondante (N) n'est exécuté que sous forme réduite.

13. Procédé selon l'une des revendications précédentes, pour lequel le système (V) de traitement d'informations pour le traitement de l'information correspondante (N) comprend la première unité de calcul (RE) et un module de sécurité (SMOD) avec une autre unité de calcul et est conçu pour exécuter, en fonction des valeurs de la grandeur caractéristique (P_S) de la priorité en ce qui concerne le contrôle de sécurité (S) de l'information (N) correspondante, le traitement de l'information (N) correspondante en ce qui concerne le contrôle de sécurité (S) dans la première unité de calcul (RE) ou dans le module de sécurité (SMOD).

14. Procédé selon l'une des revendications précédentes, au cours duquel
- une grandeur caractéristique (P_I) d'une priorité en ce qui concerne le contenu (I) de l'information (N) correspondante est déterminée en fonction du contenu (I) de l'information et
- une séquence de traitement est définie et exécutée pour un autre traitement de l'information des informations (N, N_EP) qui se trouvent dans le tampon de réception (EP) en fonction des valeurs de la grandeur caractéristique (P_S) de la priorité en ce qui concerne le contrôle de sécurité (S) et de la grandeur caractéristique (P_I) de la priorité en ce qui concerne le contenu (I) des informations (N, N_EP).

15. Procédé selon la revendication 14, au cours duquel la grandeur caractéristique (P_I) de la priorité en ce qui concerne le contenu (I) de l'information (N) correspondante est déterminée en fonction de la différence entre le contenu (I) de l'information et le contenu (I_EP) des autres informations (N_EP) stockées dans le tampon de réception (EP).

16. Procédé selon la revendication 14 ou 15, au cours duquel la grandeur caractéristique (P_I) de la priorité en ce qui concerne le contenu (I) de l'information (N) correspondante est déterminée en fonction du type (STYP) donné d'émetteur.

17. Procédé selon la revendication 14 - 16, au cours duquel, en fonction de la capacité de la mémoire du tampon de réception (EP), les informations (N, N_EP) qui se trouvent dans le tampon de réception (EP) sont rejetées en fonction des valeurs de la grandeur caractéristique (P_I) de la priorité en ce qui concerne le contenu (I, I_EP) des informations (N, N_EP).

18. Procédé selon la revendication 14 - 17, au cours duquel, en fonction de la charge (AL) de la première unité de calcul (RE) du système (V) de traitement d'informations, les informations (N, N_EP) qui se trouvent dans le tampon de réception (EP) sont rejetées en fonction des valeurs de la grandeur caractéristique (P_I) de la priorité en ce qui concerne le contenu (I, I_EP) des informations (N, N_EP).

19. Système (V) de traitement d'informations permettant de traiter des informations (N) selon le procédé conforme aux revendications 1 à 19, une information (N) correspondante comprenant au moins un élément d'authentification (A) et un contenu (I) de l'information, le système (V) de traitement d'informations comportant au moins un tampon d'entrée (EP) et étant conçu pour
- recevoir l'information (N) correspondante,
- stocker l'information (N) correspondante dans au moins un tampon de réception (EP),
- déterminer une grandeur caractéristique (P_S) d'une priorité en ce qui concerne un contrôle de sécurité (S) de l'information (N) correspondante en fonction du contenu (I) de l'information et
- définir et exécuter une séquence de traitement pour un autre traitement de l'information en ce qui concerne le contrôle de sécurité (S) en tenant compte du au moins un élément correspondant d'authentification (A) des informations (N, N_EP) qui se trouvent dans le tampon de réception (EP) en fonction des valeurs de la grandeur caractéristique (P_S) de la priorité en ce qui concerne le contrôle de sécurité (S) des informations (N, N_EP),
**caractérisé par le fait**
**que** le système de traitement d'informations comprend au moins une première unité de calcul (RE) et au moins un module de sécurité (SMOD) avec au moins une autre unité de calcul et est conçu pour exécuter le traitement des informations en ce qui concerne le contrôle de sécurité (S) de l'information (N) correspondante (N) dans la première unité de calcul (RE) ou dans le module de sécurité (SMOD) en fonction des valeurs de la grandeur caractéristique (P_S) de la priorité en ce qui concerne le contrôle de sécurité (S) de l'information (N) correspondante,
la grandeur caractéristique (P_S) de la priorité en ce qui concerne le contrôle de sécurité (S) de l'information (N) correspondante étant déterminée en fonction de au moins un élément d'authentification (A) de l'information (N) correspondante et en fonction d'une détermination d'une situation de danger (GS) menaçante, laquelle est identifiée en fonction du contenu (I) de l'information (N) correspondante ou du contenu (I_EP) d'autres informations (N_EP).
